# EUROPEAN PATENT SPECIFICATION

(11) **EP 3 952 644 B1**
(45) Date of publication and mention of the grant of the patent: **24.09.2025**
(21) Application number: 20787415.7
(22) Date of filing: 12.04.2020
(51) Int. Cl.: A01N 1/126

(54) **METHOD AND APPARATUS FOR RECONDITIONING KIDNEYS**
VERFAHREN UND VORRICHTUNG ZUR REKONDITIONIERUNG VON NIEREN
PROCÉDÉ ET APPAREIL DE RECONDITIONNEMENT DE REINS

(30) Priority: 12.04.2019 SE 1930123
(43) Date of publication of application: 16.02.2022
(73) Proprietor: UGLK Science AB, 225 94 Lund (SE)
(72) Inventor: OLAUSSON, Michael, 411 14 Göteborg (SE)
(74) Representative: Asketorp, Göran
(86) International application number: PCT/SE2020/050380
(87) International publication number: WO 2020/209787

(56) References cited:
- EP-A1- 0 631 786
- EP-A1- 0 631 786
- WO-A1-2012/128696
- WO-A1-2018/183072
- CN-A- 107 156 109
- US-A- 6 046 046
- US-A- 6 046 046
- US-B2- 7 255 983
- DIRK VAN RAEMDONCK ET AL: "Ex-vivo lung perfusion", TRANSPLANT INTERNATIONAL., vol. 28, no. 6, 28 April 2014 (2014-04-28), GB, pages 643 - 656, XP055455161, ISSN: 0934-0874, DOI: 10.1111/tri.12317
- KEVIN NELSON ET AL: "Animal models of ex vivo lung perfusion as a platform for transplantation research", WORLD JOURNAL OF EXPERIMENTAL MEDICINE, vol. 4, no. 2, 1 January 2014 (2014-01-01), pages 7, XP055561945, ISSN: 2220-315X, DOI: 10.5493/wjem.v4.i2.7

## Description

### FIELD OF INVENTION

The present invention relates to harvesting kidneys and preservation and evaluation of kidneys.

### BACKGROUND

The present pool of kidneys available for transplantation is mainly restricted to kidneys from patients which at brain death still are exposed to mechanical respiration and in which the heart is still beating. In addition, kidneys from living donators are used.

Kidneys from patients which dies from cardiac arrest before or during transport to a hospital are normally not used for transplantation. In a few cases, such kidneys have been used, especially if the time from cardiac arrest to harvesting of the kidneys is short, say less than 30 to 60 minutes. If the time from cardiac arrest to harvesting is more than 1 hour, the kidneys are normally not suitable for transplantation. If such a second pool of kidneys could be used, the number of kidneys available for transplantation could be increased ten to hundred-fold.

After cardiac arrest, the kidneys are exposed to warm ischemia, which results in accumulation of metabolic toxic end products in the kidneys. This is due to the failing circulation with oxygenated blood, resulting in the accumulating of metabolic end products.

Early after cardiac arrest, the coagulation system is activated and fibrin thrombi are formed in the microcirculation, resulting in a thrombotic event that will take hours or days to resolve if the patient, for example should be exposed to resuscitation and survives.

If death occurs, microbial barrier functions in the bowel will fail, resulting in bacterial overgrowth with endotoxins like LPS and cytokine release starting to occur in some instances within 5 minutes. The use of kidneys from donors dying of circulatory arrest are therefore considered marginal and in most cases used in situations where the circulatory arrest is controlled. Kidneys with more than two hours of warm ischemia are generally considered unsuitable for transplantation.

If the kidneys are cooled, the metabolic process decreases with about 6% per degree Celsius. At 28°C, the metabolic process has decreased to about 50% and at 22°C to about 25%.

The normal cooling of a dead body takes place by up to 2°C per hour. Thus, after 5 hours, the body may have a temperature of about 27°C.

Thus, there is a need in the art for a method to recondition the kidneys after harvesting, whereupon the second pool of kidneys could be used more extensively.

The patent publication EP0631786A1 (abstract) discloses a treatment of ischemia and the attendant reperfusion injury, which entails the of administration plasmin and plasminforming proteins, including lys-plasminogen and similar substances. Lys-plasminogen, which can be obtained from the proteolytic cleavage of glu-plasminogen, has been found to have a protective effect on tissue that has been injured by ischemic conditions. The administration of lys-plasminogen can be used to treat subjects during the time of reperfusion and after reperfusion has already occurred. Lys-plasminogen also can be administered in conjunction with clot lysis therapies, such as those that employ tissue plasminogen activator and the like. It is mentioned that the ischemic conditions and subsequent reperfusion injury caused by surgical procedures can be prevented or treated with proteins having the effect of lys-plasminogen or progenitors of lys-plasminogen. Such proteins can even have a beneficial impact on already transplanted donor organs or tissues, as well as the surrounding organs and tissues of the donor and recipient. The administration of proteins having the effect of lys-plasminogen or progenitors of lys-plasminogen permits organs and tissues to tolerate prolonged periods of ischemia as weil as the physiologic stress caused by reperfusion after transplantation. Organ and tissue damage can be reduced or prevented altogether by administering proteins having the effect of lys-plasminogen or progenitors of lys-plasminogen before the surgical procedure is started. In the case of transplantations, proteins can be administered to the donor before removal of the organ or tissue. The donor can be treated systemically or locally into an artery supplying the organ or tissue before removal of that organ or tissue. Likewise, a recipient of an organ or tissue can be treated before transplantation in order to protect organs and tissue surrounding the transplantation area as well as the organ or tissue to be placed within the recipient. Proteins having the effect of lys-plasminogen or progenitors of lys-plasminogen also can be administered during or after reperfusion. Thus, this patent publication suggests addition of lys-plasminogen to the donor or recipient body, which still has circulation, otherwise there would be no effect.

The patent publication US6046046A discloses compositions, methods, systems/devices and media for maintaining a harvested organ in a functioning and viable state prior to implantation. The organ perfusion apparatus includes a preservation chamber for storing the organ during the preservation period. A perfusion circuit is provided having a first line for providing an oxygenated fluid to the organ, and a second line for carrying depleted fluid away from the organ. The perfusion apparatus also includes a device operably associated with the perfusion circuit for maintaining the organ at a substantially normothermic temperature. The patent document does not discuss addition of lys-plasminogen.

### SUMMARY OF THE INVENTION

Accordingly, an object of the present invention is to mitigate, alleviate or eliminate one or more of the above-identified deficiencies and disadvantages singly or in any combination.

The invention is defined by the features of the appended independent claim 1.

### BRIEF DESCRIPTION OF THE DRAWINGS

Further objects, features and advantages of the invention will become apparent from the following detailed description of embodiments of the invention with reference to the drawings, in which:
Fig. 1 is a schematic view of two kidneys harvested in ensemble by cutting the aorta and vena cava.
Fig. 2 is a schematic view of the capillary systems of a kidney.
Fig. 3 is a schematic block diagram over an embodiment of a device for performing the method.
Fig. 4 is a schematic block diagram over another embodiment of a device for performing the method.
Fig. 5 is a schematic block diagram over still another embodiment of a device for performing the method.
Fig. 5a is a schematic block diagram over yet another embodiment of a device for performing the method.
Fig. 5b is a schematic block diagram similar to Fig. 5a for separate treatment of two kidneys.
Fig. 6 is a diagram showing change of arterial blood flow in Example 1.
Fig. 7 is a diagram showing urine production in Example 1.
Fig. 8 is a diagram showing renal arterial blood flow in Example 2.
Fig. 9 is a diagram showing renal arterial blood flow in Example 3.
Fig. 10 is a diagram showing renal artery flow after transplantation in Example 4.
Fig. 11 is a diagram showing renal artery flow after transplantation in Example 6.
Fig. 12 is a diagram showing renal artery flow after transplantation in Example 7.
Fig. 13 is a diagram showing renal artery flow after transplantation in Example 9.
Fig. 14 is a photograph showing the kidney in Example 9.
Figs. 15a, 15b, 15c and 15d are photographs showing a transplanted kidney according to Example 9.
Fig. 16a is a diagram showing changes in IL-6 levels mainly from the RBCs.
Fig. 16b is a diagram showing changes in IL-8 levels, also mainly from RBCs.
Fig. 16c is a diagram showing changes in IL-1β levels, also mainly from RBCs.
Fig. 16d is a diagram showing changes in TNF-α levels, also mainly from RBCs.
Fig. 17 is a diagram showing flows after perfusion with a modified solution, using an osmolality of around 300 mosm according to Example 12.
Fig. 18 is a diagram showing pressure, flow and resistance according to Example 14.
Figs. 19 to 22 are diagrams showing creatinine before and after transplantation according to Example 16.
Figs. 23 and 24 are photographs showing kidneys according to Example 16.

### DETAILED DESCRIPTION OF EMBODIMENTS

Below, several embodiments of the invention will be described. These embodiments are described in illustrating purpose in order to enable a skilled person to carry out the invention and to disclose the best mode. However, such embodiments do not limit the scope of the invention. Moreover, certain combinations of features are shown and discussed. However, other combinations of the different features are possible within the scope of the invention.

When the heart stops beating, the blood circulation ceases. This may result in a cascade of events from the body, trying to maintain blood circulation, which in the case of brain death after herniation of the brain is called the autonomic catecholamine storm, wherein large quantities of adrenalin and nor-adrenalin are released in the body in an attempt to maintain cardiovascular stability. The finally results are brain death and cardiac arrest. When the cardiac arrest takes place before herniation of the brain, other cascade events will follow affecting the coagulation and the inflammatory systems, without the catecholamine storm. Less is known about events following death due to cardiac arrest and circulation arrest.

After cardiac arrest and death, a process called pallor mortis occurs within 15 to 25 minutes, wherein the skin becomes pale. Pallor mortis results from the cessation of capillary circulation throughout the body.

Then, a process called algor mortis occurs, wherein the body changes its temperature until the ambient temperature is matched. After about 4 hours, the body temperature is about 27°C to 29°C or lower and after about 9 hours the body temperature is about 28°C depending on the surrounding temperature.

Then, a process called rigor mortis occurs, which is a post-mortem rigidity, wherein the muscles become stiff. After death, respiration ceases, depleting the source of oxygen used in the making of adenosine triphosphate (ATP). ATP is required to cause separation of the actin-myosin cross-bridges during relaxation of muscle. The body enters rigor mortis because it is unable to break those bridges. **In** rigor mortis myosin heads continue binding with the active sites of actin proteins via adenosine diphosphate (ADP), and the muscle is unable to relax until further enzyme activity degrades the complex.

Rigor mortis starts about one to four hours after cardiac arrest and peaks after about 12 hours. It affects all muscles in the body and all organs including the kidneys.

When a cardiac arrest patient is procured at a distance from the hospital, it is difficult to assess the duration of cardiac arrest and the impact on the kidneys. Thus, distant cardiac arrest bodies are normally not used for transplantation purposes. The present invention aims at recovering such kidneys and restore, evaluate and store such kidneys before transplantation.

The earlier the kidneys are harvested, the better is the outcome of the kidneys.

However, the recovery process according to embodiments of the invention is capable of recondition kidneys before and up to the peak of rigor mortis, with less good outcome at longer times after death and circulatory arrest.

All the above-mentioned actions interfere with the kidneys in the cardiac arrest body.

Cardiac arrest may activate the coagulation system of the blood, resulting in a procoagulatory state which may ultimately generate microthrombi in the capillary system. Little is known on how a decreased body temperature influences upon the coagulation procedures, both activation and des-activation of the coagulation processes.

When the circulatory system of the living body is working, whether the blood will coagulate depends on the balance between two groups of substances, some that promote coagulation, called procoagulants, and some that inhibit coagulation, called anticoagulants. **In** the normal blood stream, anticoagulants predominate so that the blood does not coagulate while it is circulating in the blood vessels.

When the blood stops circulating after cardiac arrest, there is little known about what happens with the coagulation system over time. Without being bound by any theory, it is believed that the anticoagulants are downregulated and the procoagulants are activated when there is a circulatory arrest, also dependent on the cause of circulatory arrest. The process may be slow and is also dependent on the decrease of temperature over time.

It is known that if blood is collected in a chemically clean glass test tube, the blood will normally clot in 6 to 10 minutes and this is often used for determining coagulation disorders. However, if the glass tube is replaced by a siliconized container, the blood may not clot for one hour or more, because the thrombocytes are not activated. Thus, it is believed that the blood entrapped in a harvested kidney will normally not clot until one hour or more. An extensive clotting will occur after two to four hours.

When the pressure from the heart, ceases, some of the blood vessels, notably the capillaries, become narrower, which may contribute to pallor mortis. After some further time, the presence of albumin and other oncotic substances in the blood cause an ultrafiltration of water from the surrounding tissue into the blood vessels, causing an expansion of the blood vessels, notably, the arterioles and the venules and larger vessels. Over time, the red blood cells are separated and sinks to the lowest portion of the blood vessels in a sedimentation reaction. A buffy coat comprising leucocytes and thrombocytes is formed above the red blood cells. The buffy coat has an increased concentration of thrombocytes and other proteins. The expansion of blood vessels may expose portions of the blood vessels which interact with thrombocytes and activates the thrombocytes after some two to four hours. In addition, because there is no circulation of blood, the thrombocytes may also interact with the endothelial cells, especially if there is an injury to the vessel, at the surface of the blood vessels and attach to the endothelial cells. Such interaction may further injure the endothelial cells and may also eventually result in formation of clots. Such clots may be formed in any portion of the vessels having no circulation. The decrease of temperature also influences on the coagulation system in different manners. Normally, a lower temperature will slow down the chemical reactions. Thus, after some time, normally a few hours, such as 1 to 4 hours, the blood vessels may comprise a plurality of smaller or larger clots, which adhere to the walls of the blood vessels. These clots cannot be washed out by rinsing the blood vessels of the kidneys, which normally takes place after procurement of the kidneys from a donor. Indeed, if the clots are attempted to be flushed out by high pressure and high flushing flows, there may be damages to the endothelial cells. where the clots have been torn off. Instead, these clots remain during the time the kidneys are stored after harvesting and before transplantation. When the kidneys are ultimately transplanted into a recipient, the blood vessels are exposed to the blood of the recipient, which may result in formation of new clots in damaged areas of the blood vessels. Thus, it is important to remove clots as soon as possible, especially if the kidney has been procured from the donor after some time, such as 2 hours, 3 hours, 4 hours or more after circulatory arrest. Since such clots are produced some time after circulatory arrest, this problem is larger in kidneys harvested from donors after a long time of circulatory arrest, such as 4 hours or longer. On the other side, the process is slowed down by low temperature, which means that if the donor body is cooled more rapidly before harvesting, this may reduce the clotting process.

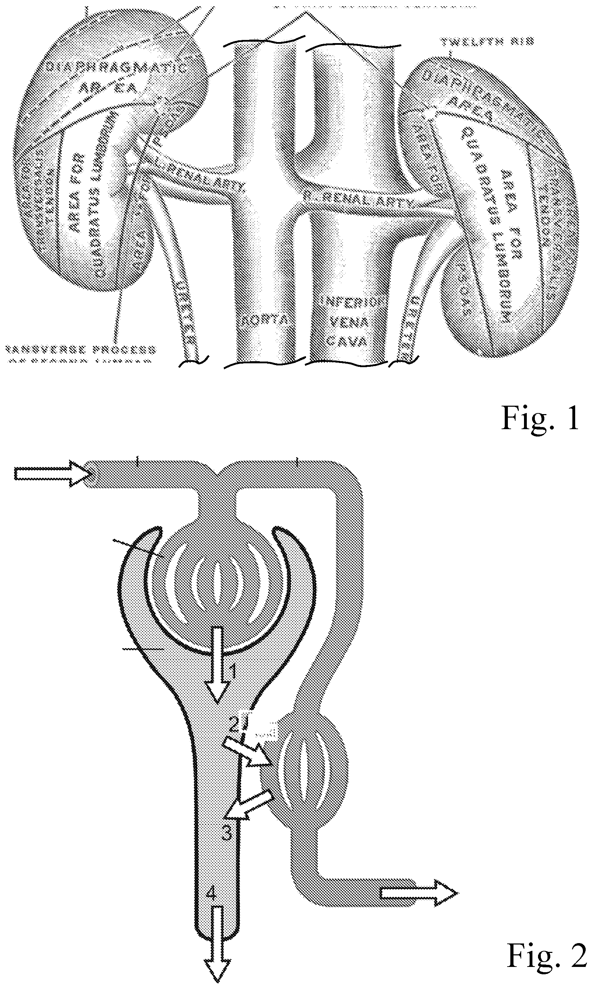

The kidney is special in that it comprises two serially connected capillary systems, the glomerular capillaries and the peritubular capillaries, with efferent arterioles arranged between the two capillary systems, as shown in Fig. 2. Thus, microclots may have been formed in both capillary systems. In addition, larger clots may have been formed in the efferent arterioles, which are entrained between the capillary systems. The coagulation process will affect the kidneys and block the two capillary systems and the efferent arterioles present there between. Thus, it is difficult to rinse out the clots from kidneys in which microclots have been formed.

When a clot is formed, a large amount of plasminogen is trapped in the clot along with other plasma proteins. The plasminogen will not become plasmin or cause lysis of the clot until it is activated. In the living body, the injured tissues and vascular endothelium very slowly release a powerful activator called tissue plasminogen activator (tPA) that later eventually converts plasminogen to plasmin, which in turn removes the remaining blood clot. In fact, many small blood vessels in which blood flow has been blocked by clots, are reopened by this mechanism in the living body. Thus, an especially important function of the plasmin system is to remove minute clots from millions of tiny peripheral vessels that eventually would become occluded were there no way to clear them.

The plasminogen trapped in the clot is normally glu-plasminogen, which is slowly converted to plasmin at exposure to tPA. This causes the slowly start of the system. However, after some time, glu-plasminogen is converted to lys-plasminogen, which is much faster converted to plasmin. Thus, there is a positive amplification system, that increases the speed of lysis of clots after the initial time, which may be up to 48 hours.

After long experimentation, the inventor concluded that the formation of clots during the first few hours of ischemia may be detrimental to the kidneys. It is believed that thrombocytes are activated by the non-flow of blood and the clots formed may influence upon and injury endothelial cells in the vicinity of the clot. Since there is no circulation after death and circulatory arrest, the clots will have a long time to influence upon the endothelial cells, which become damaged.

The endogenous lysis system may be used for lysis of the microclots in a donor kidney. However, the clot lysis is slow. Indeed, addition of large amounts of tPA will not increase the speed of activation of the plasminogen to plasmin.

However, it has been found that addition of lys-plasminogen and addition of tPA will enhance the lysis of the clot and speed up the process. Care may also be taken to the local environment after lysis of a clot, to prevent re-thrombosis, since the local endothelium is more vulnerable after a fibrinolytic treatment.

In order to verify the recondition process, kidneys from pigs exposed to warm ischemia during 4 hours or more have been used for experimental purposes. There is evidence that kidneys exposed to ischemia during 6 hours, 8 hours, 10 hours, 12 hours or more can be recondition. In addition, kidneys exposed to ischemia for one hour or less may also, more or less, benefit from the process, thus including kidneys from brain dead donors (BDD) considered marginal either by extended warm or cold ischemia time or other cofounding factors, such as age, hypertension, diabetes, hypotension, time in the intensive care unit (ICU), anuria, elevated laboratory values, poorly perfused kidneys on the backtable or any other cause for not primarily accepting the donor for transplantation.

In an embodiment of the present invention, kidneys exposed to warm ischemia during prolonged and unknown time, is recovered by using the main steps mentioned below. The steps do not need to be performed in exactly the sequence indicated below, as will be further explained.

**A first step** may comprise that lys-plasminogen and tPA are injected in the arteries of the kidney shortly after harvesting and at the backtable, sequentially or combined, or it may be injected through an extracorporeal, ex-vivo perfusion device, sequentially or combined. The lys-plasminogen is comprised in a carrier fluid which is a physiological iso-tonic electrolyte fluid, possibly comprising a hyperoncotic agent. About 5 to 20 ml lys-plasminogen may be injected (using 5 to 100U/kidney). The lys-plasminogen will adhere to any clots present in the blood vessel of the kidney. About 15 minutes later (or simultaneously), about 5 to 20 ml tPA (using 0.5 to 10 mg/kidney) may be injected in the same way in the arteries. The tPA may be comprised in a carrier fluid which is a physiologically iso-tonic electrolyte fluid, possibly comprising a hyperoncotic agent. The first step may be provided at room temperature or above, such as 20°C to 37°C.

The kidneys may additionally be exposed to a circulation or perfusion step wherein the kidneys are connected to a perfusion device by inserting connectors in the arteries of the kidney and arranging the kidney in a container for collection of fluid emerging from the veins. The container may comprise 500 - 1500 ml of a circulation fluid which is a physiological iso-tonic electrolyte fluid and further may comprise a hyperoncotic agent, for example albumin 57 g/L, alone or in combination with additional hyperoncotic agents. The circulation fluid is circulated at a temperature of 15°C to 24°C (room temperature) through the kidney for 35 minutes or longer, starting with a pressure of 20 mmHg and repeatedly increasing the pressure by 5 mmHg each 5-minute period up to a maximum of 70 mmHg, followed by a 30 minutes period at lower pressure, for example 30 mmHg. During this time, the lys-plasminogen and
tPA are further circulated in the kidney and the resistance will progressively decrease. The kidney is examined for colour and the treatment at high pressure may be interrupted to continue to lower pressure when the kidney has a pale appearance.

There may be added one or several of:
a thrombin inhibitor, such as Antithrombin **III** (ATIII); argobatran, or any other direct thrombin inhibitor, such as inogatran, melagatran (and its prodrug ximelagatran), dabigatran or hirudin and derivates thereof;
allosteric inhibitors;
a platelet inhibitor, such as glycoprotein IIb/IIIa receptor antagonists (abciximab, eptifibatide, tirofiban);
irreversible cyclooxygenase inhibitors (aspirin, triflusal);
adenosine diphosphate (ADP) receptor inhibitors (cangrelor, clopidogrel, prasugrel, ticagrelor, ticlopidine);
phosphodiesterase inhibitors (cilostazol);
protease-activated receptor-1 (PAR-1) antagonists (vorapaxar);
adenosine reuptake inhibitors (dipyradimol);
thromboxane inhibitors (thromboxane synthase inhibitors such as ifetroban, picotamide, and
thromboxane receptor antagonists such as terutroban);
or any other platelet inhibitor, in combination or alone, to prevent re-thrombosis of treated clots. These may be added during the first injection step or the first circulation step or any of the other steps. Addition of Heparin or low molecular heparin is optional.

**A second step** of the process includes perfusion and restoration of the circulation system by circulation of a hyperoncotic fluid through the vessels of the kidney. Hyperoncotic is defined as a pressure caused by proteins in plasma, but can be artificially constructs such as Dextran or Poly Ethylene Glycol (PEG). The common property is that it should have a higher colloid oncotic pressure than the surrounding tissue of the kidney it flows through. Furthermore, the fluid may be perfused at a low temperature, for example 12°C to 24°C, and at a low pressure, for example 20 mmHg to 30 mmHg at one phase of the restoration phase, and at a higher temperature, for example 18°C to 32°C at another phase of the restoration phase, at which perfusion pressure could also be higher, for example 25 mmHg to 70 mmHg or 90 mmHg. One hyperoncotic fluid comprises albumin at a high concentration of 40g/L to 120 g/L, such as 50g/L to 80g/L for example 57g/L or 72 g/L, but may also contain other substances with similar properties, or combinations thereof. The hyperoncotic fluid may comprise a high amount of potassium compared to normal extracellular levels, about 10 mM to 25 mM. The hyperoncotic fluid may also comprise an osmotic membrane impermeable agent - Gluconate and Glucose, but may contain other agents with similar function instead or in combination of such (Lactobionate, Raffinose, Mannitol). The fluid may be oxygenated by being exposed to a gas composed of Oxygen (O₂ 20%), Carbon Dioxide (CO₂ 6.5%) and Nitrogen (N₂ 73.5%) at normal atmospheric pressure, where the percentage of Oxygen can be changed according to the metabolic need after blood gas analyses. The hyperoncotic fluid removes water from the interstitial tissue of the kidney and restores the capillary system. In addition, toxic products from the failing metabolic process are washed out and the pH is restored, using a buffer system such as Bicarbonate, but may additionally or alternatively contain other agents or substances with similar function (Phosphate, Histidine/histidine-HC).

Since the kidney has been exposed to ischemia during a prolonged time, the glycogen stores have been consumed resulting in lack of ATP. Thus, the cellular ion pumps fail to work and the Na/K balance inside and outside the cells is compromised. The pH decreases and lactate and pyruvate are produced and accumulated in the tissue. The hyperoncotic fluid comprises glucose and/or adenine as a substrate of metabolism, but may additionally or alternatively contain other agents with similar function (α-Ketoglutarate, Histidine, Glutamic acid). However, the metabolic rate is very slow at such low temperature.

The circulation is performed at a low pump pressure. During the circulation, the vascular resistance decreases successively and the circulation is continued until the vascular resistance is sufficiently low, which may be several hours.

**A third step** of the process includes further restoration of microenvironment and evaluation of the kidney. The temperature is increased to about 32°C and the pressure is increased to 30 mmHg or up to 70 mmHg. Washed red blood cells (RBC) are added to a haematocrit of 3 to 20, such as 5 to 10, for example 6 to 8. Oxygenation is performed by an oxygenator with increased levels of oxygen. Normally, the kidney starts to produce urine and the ability to concentrate creatinine is measured as an indication of function. A known amount of creatinine may be added to the solution as a marker of filtration capacity of the kidneys. In addition, the kidney is visually examined. If the kidney comprises (large) dark areas, it may be an indication of a failing kidney. In addition, kidney vascular resistance is evaluated.

If the kidney is considered suitable for transplantation, the kidney is transplanted directly, or cooled down to a low temperature of 4 to 15°C and stored until transplantation.

A storage period may also be arranged between the second and third step.

The different steps can be modified in many respects.

**The first step** may be modified by interleaving one or several first steps after the second step. For example, the hyperoncotic fluid may be perfused during one hour, whereupon lys-plasminogen and tPA and possibly ATIII is added and the perfusion may be continued for another one hour, whereupon lys-plasminogen and tPA and possibly AIII is added again, etc.

**The second step** may be modified by perfusing the hyperoncotic fluid during a first period of about one hour and then lowering the colloid oncotic pressure, for example by lowering the albumin concentration from for example 72g/L to for example 57 g/L and circulating the fluid for another one to three hours. The hyperoncotic fluid may additionally comprise Dextran 40 in a dose of 0.1 to 10% alone or in combination with albumin or any other hyper oncotic agent.

**The third step** may be modified by including a coagulation inhibitor and/or a platelet inhibitor, to prevent re-thrombosis of treated clots. The same products as mentioned above in relation to the first step may be used. The products may be added to the RBC suspension before it is added to the kidneys during the third step, to the perfusion solution before the RBCs are added, or to both solutions. It is believed that the clots formed in the microcirculation system and vessels are sticky and adhere to the endothelial cells. When the clots are dissolved they will leave a damage to the endothelial cells and the glycocalyx. This damage will activate possible platelets and coagulation factors in the RBC suspension, that remain in spite of washing of the red blood cells. Such activation may result in new formation of clots at the same place, which should be avoided. Antithrombin III, or any direct thrombin inhibitor, will react with thrombin and deactivate and remove thrombin. Abciximab, or any other platelet inhibitor, prevents platelets from sticking together and sticking towards damaged endothelial cells. Addition of Heparin or low molecular heparin is optional.

**The third step** may be modified to be performed at 28 to 37°C and 30 to 90 mmHg.

Rinsing steps may be performed between the steps and during the steps. A rinsing fluid is passed through the kidney and then discarded. Thus, the rinsing fluid is not circulated through the kidney
The kidneys are harvesting as soon as possible, while it is unknown how long time the kidney has been exposed to ischemia because of circulatory arrest or other causes, but the ischemic time is more than 2 hours, such as about 3 hours or 4 hours or longer. The kidney is harvested by making free the kidneys, aorta and vena cava and cutting the aorta and vena cava above and below the renal arteries and the renal veins as shown in Fig. 1. The assembly is put on a backtable and the aorta residue and vena cava residue are cleared from visible clots.

As soon as possible, the lys-plasminogen (5 to 100U) is injected in the renal arteries by a needle and syringe, whereby the renal artery is squeezed before the syringe to ensure that all lys-plasminogen passes into the renal arteries and into the kidney. When fluid leaves the renal veins, it is an indication that the kidneys have been perfused by lys-plasminogen. The lys-plasminogen interacts with the clots in the blood vessels and binds to the clots and fibrin in the clots. Then, the renal veins are clamped as well as both renal arteries until it is time for the tPA injection.

Next, the tPA is injected in the same way as the lys-plasminogen. However, the veins may remain clamped so that a slight overpressure is generated inside the kidney. The aorta is then cannulated at one end and clamped at the other end, setting up the system for ex-vivo machine perfusion. Both ureters are cannulated to allow monitoring of the urine.

A thrombin inhibitor, such as Antithrombin **III** (ATIII) or argobatran may be added together with the lys-plasminogen and/or together with the tPA.

It is noted that the injected volume of lys-plasminogen, about 10 ml, corresponds to about half of the volume of blood normally included in the kidney, which is about 15 to 30 ml per kidney (if the kidney has a weight of 150 g) (10 to 20 ml/100 g kidney). The volume of tPa is also about 10 ml and the dose is 0.5 mg to 10 mg per kidney.

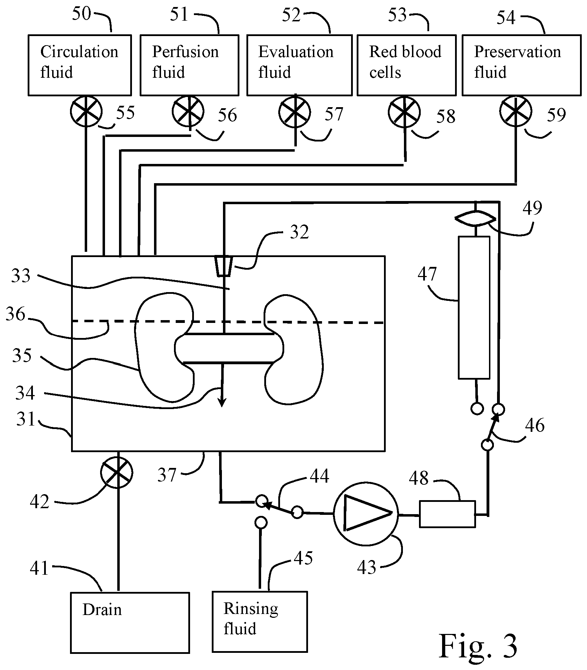

Finally, the kidneys are put in a closed container with the kidneys hanging in the aorta residue and connected to a circulatory system as shown in Fig. 3. The lower end of vena cava is opened so that fluid may flow freely out of the kidneys, while fluid is provided to the aorta by the circulatory system of the container.

Sometimes, the kidneys are treated separately, whereby the aorta is divided longitudinally in two portions and cannulas are connected to renal arteries still being running off from the divided aorta patch as shown in Fig. 3, allowing several arteries being treated as a single artery would be and with the possibility to monitor each kidney separately. In humans, more than one artery per kidney can be seen in more than 30% of all kidneys. With the suggested techniques, this will not be any problem.

As shown in Fig. 3, an aorta residue 33 of the kidney 35 is connected to a connector 32 arranged in a container 31. The vena cava 34 is open to emit fluid to the bottom 37 of the container 31 as shown by broken line 36. The fluid level 36 may be below the kidney or above the kidney or in between, the latter being shown in Fig. 3.

The bottom 37 of the container is connected to a drain bag 41 via a valve 42. The bottom is also connected to a pump 43 via a first switch valve 44. The first switch valve 44 connects the inlet of the pump 43 to either a rinsing fluid bag 45 or to the bottom 37 of the container 31, in the first position shown in Fig. 3.

The outlet of the pump 43 is connected to a heater/cooler 48 which controls the temperature of the fluid passing through the pump. The outlet of the heater/cooler 48 passes via a second switch valve 46 to an oxygenator 47 and a leucocyte-filter 49, or directly to the connector 32 and to the kidney in the first position of the switch shown in Fig. 3. In the shown position, the fluid is only oxygenated by being exposed to the surrounding atmosphere (oxygen dissolved in the fluid).

Thus, fluid present at the bottom of the container 37 is circulated via first switch 44 to the pump 43 and further via the heater/cooler 48 to the second switch 46 and to the connector 32. The fluid proceeds from the connector 32 to the aorta and to the kidney and through the vessels of the kidney and further to the veins of the kidney and is finally released to the bottom of the container.

The pump 43 may be a pressure controled pump so that the pump pressure is adjusted to a desired value of for example 20 mmHg and the flow depends on the resistance of the kidney.

The fluid present at the bottom 37 of the container 31 is provided via several bags 50, 51, 52, 53 and 54 as shown in Fig. 3. Each bag is connected to the container 31 via valves 55, 56, 57, 58 and 59. By opening the valves, the contents of the bags are transported to the bottom of the container by gravity.

The operation may be as follows in one embodiment:
After the kidneys have been exposed to lys-plasminogen and tPA at the backtable after harvesting, the kidneys are moved to the container 31 and the aorta residue is connected to the connector 32 so that the kidneys hang inside the container 31. The veins are open and allow the fluid to drain directly down to the bottom 37 of the container. The kidneys may rest on a support (not shown) such as a net, and may have different angles of its position in regard to the horizontal axis. The temperature in the container is set to the desired starting temperature, for example 18°C to 28 °C. A circulation fluid comprising electrolytes, and possibly albumin at a concentration of 57 g/L may be provided to the container 31 from circulation fluid bag 50 by opening the corresponding valve 55. The kidneys are then perfused, starting with a pressure of 20 mmHg for 5 minutes, followed by increase of 5 mmHg each 5 minutes until 50 mmHg to 90 mmHg, whichever has been decided in advance. The pressure may then be lowered to for example 20 to 30 mmHg and perfused for an additional period decided in advance. The resistance of the kidney has decreased and the kidney is now normally pale with no, or only small, dark areas. This is an indication that clots in the blood vessels of the kidneys have been dissolved and removed. The fluid inside the container is now passed to drain 41 by opening the drain valve 42.

Without being bound by any theory, it is believed that dark areas of the kidney is an indication of areas with no circulation, which may be because of clots or other reasons. If circulation later is obtained in these dark areas, the kidney may recover these areas into functioning tissue.

In a perfusion step, the drain valve 42 is closed and 1000 ml of a perfusion fluid 51 is passed to the container 31 via gravity by opening the valve 56. The fluid level in container would rise above the line 36 when 1000 ml of fluid has been accumulated at the bottom of the container, whereupon valve 56 is closed. The first switch valve 44 is in its first position shown in Fig. 3 and the pump is started and pumps at a pressure of 20 mmHg. The heater/cooler 48 adjusts the temperature to 12 to 18°C. The fluid at the bottom of the container is circulated at a pressure of 20 to 30 mmHg during several hours, such as one to four hours. During the perfusion step, the chemistry of the kidney is restored and toxic products are removed. Now the pump is stopped and rinsing is performed. The perfusion step may be repeated with another composition of the perfusion solution, after the rinsing steps, during the hypothermic perfusion period, or the perfusion may also continue during another higher temperature, with or without RBCs.

In an evaluation step, the same solution from the perfusion step may be used after the drain valve 42 is opened to drain the contents of the container to the drain 41 or the drain valve 42 is closed after two rinsing steps described above and 500 ml of an evaluation fluid 52 is passed to the container 31 by gravity by opening the valve 57. When 500 ml of fluid has been entered, the valve 57 is closed. The first switch valve 44 is in its first position shown in Fig. 3 and the pump is started and pumps at a pressure of 20 mmHg. The heater/cooler 48 increases the temperature to 28 to 32°C. After 5 to 30 minutes under which the pH and the environment is checked, a red blood cell suspension (RBC) is added from bag 53 by opening valve 58 until a hematocrit of 5 to 10 is obtained, whereupon the valve 58 is closed. The second switch valve 46 is moved to its second position including the oxygenator 47 in the circuit for oxygenation of the fluid and the red blood cells. The circulation proceeds during 1 to 4 hours with a pressure of 30 mmHg until the kidney is determined to be usable for transplantation purpose. The kidneys are now evaluated under 32 to 37°C and a pressure of 70 to 90 mmHg for 15 minutes, noting vascular resistance, flow and visual appearance in regards to how well the kidney is perfused. The surgeon decides whether the kidney is well, moderate or poor perfused, moderate being several blue/black spots and poor being several large dark blue or black areas not perfused. Urine production is measured and flow is registered as ml/min and 100g kidney tissue. Now the pump is stopped and the drain valve 42 is opened to drain all fluid in the bottom of the container to the drain 41.

Any rinsing step may be performed by moving the first switch valve 44 to its second position connecting the pump 43 to the rinsing fluid bag 45. The pump is activated and circulates about 200 ml to the kidneys. The fluid leaving the kidney to the bottom of the container is passed further to the drain 41 via the open valve 42. In this manner, all red blood cells are rinsed out of the kidney and to the drain. Such rinsing steps may be performed several times and between other steps.

In a preservation step, the drain valve 42 is closed and 500 ml of a preservation fluid 54 is passed to the container 31 by gravity by opening the valve 59. When 500 ml of fluid has been entered, the valve 59 is closed. The first switch valve 44 is in its first position shown in Fig. 3 and the pump is started and pumps at a pressure of 20 to 30 mmHg. The heater/cooler 48 adjusts the temperature to 6 to 18°C, such as 12 to 15°C. The fluid at the bottom of the container is circulated at a pressure of 20 to 30 mmHg during several hours, up to 48 hours or more, until a recipient has been found and the kidney is prepared for transplantation to the recipient. The pump is stopped and the drain valve 42 is opened to drain all fluid in the bottom of the container to the drain 41. The kidney is removed from the connector 32.

The fluids used in the embodiment described in Fig. 3 may be the fluids detailed in Table A.

During the backtable procedure, the lys-plasminogen is included in a carrier fluid which may be identical to the base solution in Table A.

In an embodiment, the carrier fluid, the rinsing fluid, the perfusion fluid and the preservation fluid may have the same basic components. These components include a sodium content of 113mM to 129 mM, a potassium content of 5mM to 25 mM, a magnesium content of 2.5mM to 5 mM and a calcium content of 1 mM to 5 mM. In addition to the above-mentioned electrolytes, one or several of the following substances may be included: albumin at a concentration of 10g/L to 120 g/L, such as 40 g/L to 75g/L, for example 57 g/L or 72 g/L; optionally Dextran 40 at 0 g/L to 100 g/L, Hydroxy Ethyl Starch (HES) at 0 g/L to 70g/L, Poly Ethylene Glycol (PEG 20) at 0 g/L to 25 g/L or PEG 35 at 0 g/L to 3 g/L alone or in combination. Dextrose 5 mM and bicarbonate 10 to 35 mM are also optional. Furthermore, amino-acids such as L-Arginine (precursor to Nitric Oxide (NO), regulation of blood pressure, during physiological stress), L-Leucine (protein synthesis), L-Glutamine (synthesizes L-Arginine, needed for amino acid production) or other, alone or in combination, may be added in normal concentrations (see Table A). Other substances that may be added are I-Inositol (membrane potential stabilizer), Adenine and Ribose (makes adenosine - part of ATP). Trace substances (cofactors and vitamins) such as stated in Table A, may also be added. Naturally occurring hormones may be added, such as Novorapid, T3, T4, Progestrone and Estrogen, in physiological concentrations (Table A). Antibiotics, such as Tienam may be added. This basic fluid according to Table A may be used as at least one of: the carrier fluid, the rinsing fluid, the circulation fluid, the perfusion fluid and the preservation fluid.

| **TABLE A** | | | **Vitamins** | | **mM** |
|---|---|---|---|---|---|
| **COMPONENT** | | | L-Ascorbic Acid • Na | | 0-2 |
| **Inorganic Salts** | | **mM** | D-Biotin | | 0.005 |
| CaCl₂ • 2H₂O | | 0-5 | Choline Chloride | | 0-0.05 |
| MgSO₄ (anhydrous) | | 0-10 | Folic Acid | | 0-0.01 |
| KH₂PO₄ | | 0-60 | myo-Inositol | | 0-0.1 |
| KCl | | 0-25 | Niacinamide | | 0-0.1 |
| NaHCO₃ | | 0-80 | D-Panthothenic Acid • ½Ca | | 0-0.01 |
| NaCl | | 0-140 | Pyridoxinhydrochloride | | 0-0.01 |
| Na₂HPO₄ (anhydrous) | | 0-5 | Riboflavin | | 0-0.001 |
| NaGluconate | | 0-110 | Thiamine • HCl | | 0-0.01 |
| KGluconate | | 0-25 | Vitamin B12 | | 0-0.01 |
| MgGluconate | | 0-10 | **Hormones** | | |
| NaLactobionate | | 0-110 | T3 | | 0-0.0000030 |
| KLactobionate | | 0-25 | T4 | | 0-0.0000030 |
| CaLactobionate | | 0-10 | Cortisol | | 0-0.0000166 |
| **Amino acids** | | | Insulin Novorapid (U) | | 0-40 |
| L-Alanine | | 0-1 | Progesterone | | 0-0.0100 |
| L-Arginine • HCl | | 0-1 | Estrogen | | 0-0.1004 |
| L-Asparagine • H₂O | | 0-1 | **Other** | | |
| L-Aspartic Acid | | 0-1 | Adenosine | | 0-5 |
| L-Cysteine • HCl • H₂O | | 0-0.1 | Cytidine | | 0-0.1 |
| L-Cystine • 2HCl | | 0.5 | 2'Deoxyadenosine | | 0-0.1 |
| L-Glutamic Acid/Ketoglutarate | | 0-5 | 2'Deoxycytidine • HCl | | 0-0.1 |
| L-Glutamine | | 0-15 | 2'Deoxyguanosine | | 0-0.1 |
| Glutathione | | 0-5 | Guanosine | | 0-0.1 |
| Glycine | | 0-5 | Pyruvic Acid | | 0-5 |
| L-Histidine • HCl • H₂O | | 0-210 | Thioctic Acid | | 0-0.01 |
| L-Isoleucine | | 0-1 | Thymidine | | 0-0.1 |
| L-Leucine | | 0-1 | Uridine | | 0-0.1 |
| L-Lysine • HCl | | 0-1 | Allupurinol | | 0-5 |
| L-Methionine | | 0-1 | Dextrose | | 0-200 |
| L-Phenylalanine | | 0-1 | D-Ribose | | 0-10 |
| L-Proline | | 0-1 | Raffinose | | 0-60 |
| L-Serine | | 0-0.02 | Mannitol | | 0-120 |
| L-Threonine | | 0-2 | **Hyperoncotic fluid** | | |
| L-Tryptophan | | 0-4 | HES | | 0-5 |
| L-Tyrosine • 2Na • 2H₂0 | | 0-1 | PEG35 | | 0-0.5 |
| L-Valine | | 0-2 | Albumin (g/L) | | 0-120 |
| **Drugs** | | | Dextran 40/70 (%) | | 0-15 |
| Verapamil | | | | | |
| Heparin | | 0-10000 U | | | |
| Minirin | | 0-000000009 | | | |

The perfusion fluid may have a high oncotic pressure, which is achieved by addition of a hyperoncotic solution such as albumin to a concentration of between 70 g/L to 120 g/L, for example 72 g/L, and perhaps Dextran 40 (or Dextran 70) at 0 g/L to 150 g/L or any other known hyperoncotic fluid. Potassium may be kept higher than in normal plasma in the range 13 to 25mM, such as 17 to 22 mM, for example 18 mM. Alternatively, the potassium concentration may be low, such as 1 mM to 13 mM. The potassium and sodium levels will vary during the RBC phase due to the normalization of the physiological environment and pH.

The evaluation fluid may further include:
a coagulation inhibitor, such as argobatran (or any other direct thrombin inhibitor, such as inogatran, melagatran (and its prodrug ximelagatran), dabigatran or hirudin and derivates thereof, or allosteric inhibitors);
and a platelet inhibitor, such as glycoprotein IIb/IIIa receptor antagonists (abciximab, eptifibatide, tirofiban),
Irreversible cyclooxygenase inhibitors (aspirin, triflusal),
adenosine diphosphate (ADP) receptor inhibitors (cangrelor, clopidogrel, prasugrel, ticagrelor, ticlopidine),
phosphodiesterase inhibitors (cilostazol),
protease-activated receptor-1 (PAR-1) antagonists (vorapaxar),
adenosine reuptake inhibitors (dipyradimol),
thromboxane inhibitors (thromboxane synthase inhibitors such as ifetroban, picotamide, and
thromboxane receptor antagonists such as terutroban) or
any other platelet inhibitor - in combination or alone, to prevent re-thrombosis of treated clots.

Heparin, Protein C and Protein S are optional.

Verapamil may also be added.

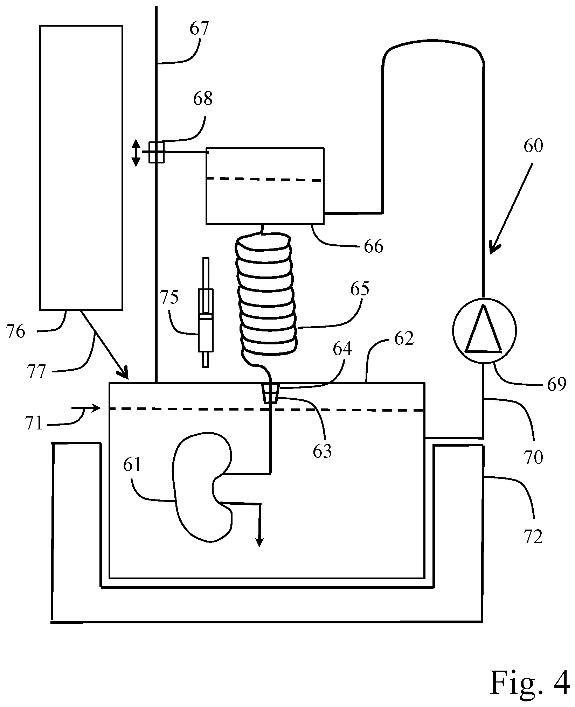

Fig. 4 shows another embodiment. This embodiment is intended to be used at a local hospital comprising facilities for harvesting kidneys. The kidneys are pretreated at said local hospital and later transported to a central hospital responsible for the transplantation to a recipient.

At the local hospital, the victim of cardiac arrest, the donor, arrives at a time from death which is unknown, but lower than 12 hours, 10 hours, 8 hours, 6 hours or 4 hours. As soon as the donor arrives, the carcass may be subjected to cooling in order to slow down the deleterious procedures in the body, in particular the metabolism and the coagulation. Such cooling may be topical in that the body is put in a room or compartment being refrigerated, for example having an air temperature of around 0°C. Other methods of cooling may be to arrange an ice slurry around the body or in the abdominal cavity, or cold fluid may be instilled in the abdominal and/or the thoracic cavity.

If a harvesting team is present at the local hospital, the harvesting may takes place as soon as possible, with or without any cooling.

During harvesting of the kidneys, normal procedures are performed and the kidneys are put on a backtable, either kept en-bloc or each kidney separately. At the backtable, the first step of injecting lys-plasminogen in the renal arteries is performed. The lys-plasminogen is allowed to stay in the kidney blood vessels during approximately 15 minutes or more during which time the kidney is further prepared by attaching a connector to the renal arteries or the aorta.

After about 15 minutes, or as soon as possible, the kidney is transferred to a container assembly 60 as shown in Fig. 4. A connector 63 of the kidney 61 is attached to a corresponding connector 64 at a top of a container 62, whereupon the kidney 61 hangs inside the container 61 as shown in Fig. 4. The vein of the kidney opens directly to the interior of the container 61.

When the connector 64 is still open, a syringe 75 is connected and about 10 ml of tPA (Alteplas) is injected into the arteries of the kidney via connector 64. It is noted that the addition of lys-plasminogen may alternatively be performed via a syringe attached to the connector 64 before the addition of tPA and instead of addition at the backtable. Still alternatively, the lys-plasminogen and the tPA may be added simultaneously via a syringe to the connector 64 or being injected simultaneously at the backtable.

Instead of alteplas, another tPA could be used, such as streptokinase, urokinase, reteplase and tenecteplase.

Then, a tube 65 is connected to the connector 64. The tube 65 is arranged in a spiral configuration and connects a pressure bag 66 to the connector 64. The pressure bag 66 is supported by a stand 67 at a predetermined height of for example 27 cm above the container 64 (corresponding to a pressure of 20 mmHg). The height position of the pressure bag 66 is adjustable along the stand 67 by a worm gear motor 68. The spiral configuration of the tube 65 accommodates the tube 65 to the height position. Initially, the bag is empty.

A circulation fluid bag 76 comprises a circulation fluid including electrolytes and an hyperoncotic agent, such as albumin, (Table A). The circulation fluid in bag 76 is added to the container 62 as indicated by arrow 77. There is about 1 L circulation fluid and the volume of the container 62 is about 1.3 L, which means that the container 62 is almost full with circulation fluid. The circulation fluid is oxygenated via an oxygenator using a gas mix of O₂, CO₂ and N₂ at 1L/min. The operation is performed at room temperature. The circulation fluid circulates together with the lys-plasminogen and tPA in the system.

The amount of circulation fluid may be smaller than 1 L but should be larger than the volume of the tubes and pumps (except the container) and the kidneys. In addition, a small volume is needed for being enclosed in the container. Such volume may be 10 ml, 20 ml, 50 ml, or larger. Thus, for example 150 ml to 1000 ml circulation fluid may be used.

A pump 69 is connected to the container 62 via tube 70 and pumps circulation fluid from the container 62 to pressure bag 66. A level detector 71 starts the pump 69 when the fluid level of container 62 reaches a predetermined level. The pump is for example a peristaltic pump having a flow rate corresponding to the revolution rate of the pump. There is no need for the pump being pressure controlled.

The pump 69 may be operated at a flow rate of for example 75 ml/min during one minute, whereupon 75 ml of fluid is transferred from container 62 to pressure bag 66. The pump flow is selected to correspond to a desired rate of flow through the kidney which indicates that the resistance of the kidney is sufficiently low. A flow of 50 ml/min per 100 g kidney is normally considered sufficient. A normal kidney of an adult man is about 150 g.

Since the pressure bag 66 is arranged at a height of for example 27 cm above the container 62, a flow of circulation fluid passes through the kidney at said pressure of 27 cm water pillar, which corresponds to 20 mmHg. If the resistance of the kidney is large, this pressure of 27 cm water pillar may cause a flow through the kidney of for example 7.5 ml/min, which means that the fluid level in container 62 is reverted to the level of the level detector 71 in 10 minutes. Then, the pump 69 is started by the level detector 71 and the procedure is repeated.

The pressure bag 66 may be moved to a higher position by the worm gear motor 68. In an embodiment, the worm gear motor 68 increases the height of the pressure bag by 1 cm/min. When the pressure increases, for example after 10 minutes to 35 cm water pillar, the flow through the kidney increases, for example to 15 ml/min. This means that the pump 69 is operated again after 5 minutes. When the pressure has increased so that the flow through the kidney is 75 ml/min, the pump 69 will operate continuously. This is an indication that the resistance of the kidney is sufficiently low. The increase of the height of the pressure bag 66 will now be stopped.

The maximum height of the pressure bag may be for example 95 cm, corresponding to a pressure of 70 mmHg. If the desired flow (75 ml/min for a kidney of 150 g) has been reached before the pressure bag is in the top position (after maximum 70 min), the procedure is interrupted. If the desired flow has not been reached, the operation is continued another 30 minutes at the pressure of 70 mmHg (95 cm water pillar).

The operation so far has been performed at room temperature of between 18°C to 28°C.

The container 62 is provided with a jacket 72 covering a large lower portion of the container. The jacket may now be provided with an ice slurry for cooling the container 62 to a temperature of about 5°C to 18°C, such as 12 to 15°C. The pressure chamber is lowered to 25 cm and the pump is operated to circulate the circulation fluid through the kidney. The container with jacket and pressure bag may be arranged in an insulating box (not shown) and the assembly is transported to a main hospital responsible for the continued handling. The kidney may be stored in this condition for a long time, up to 48 hours or longer.

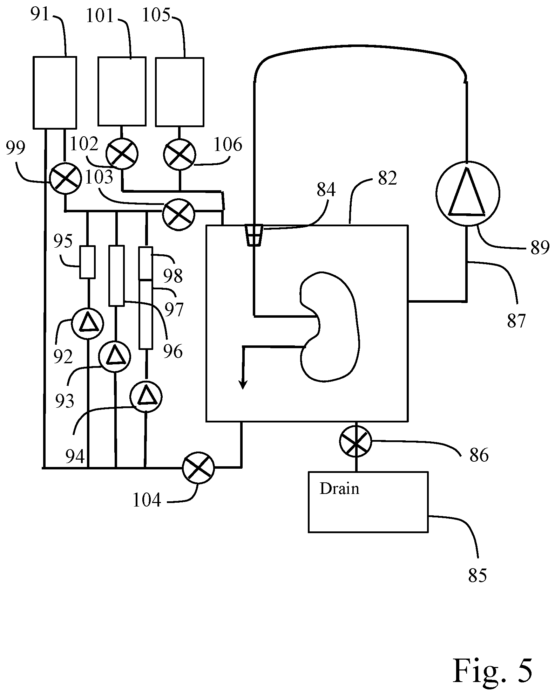

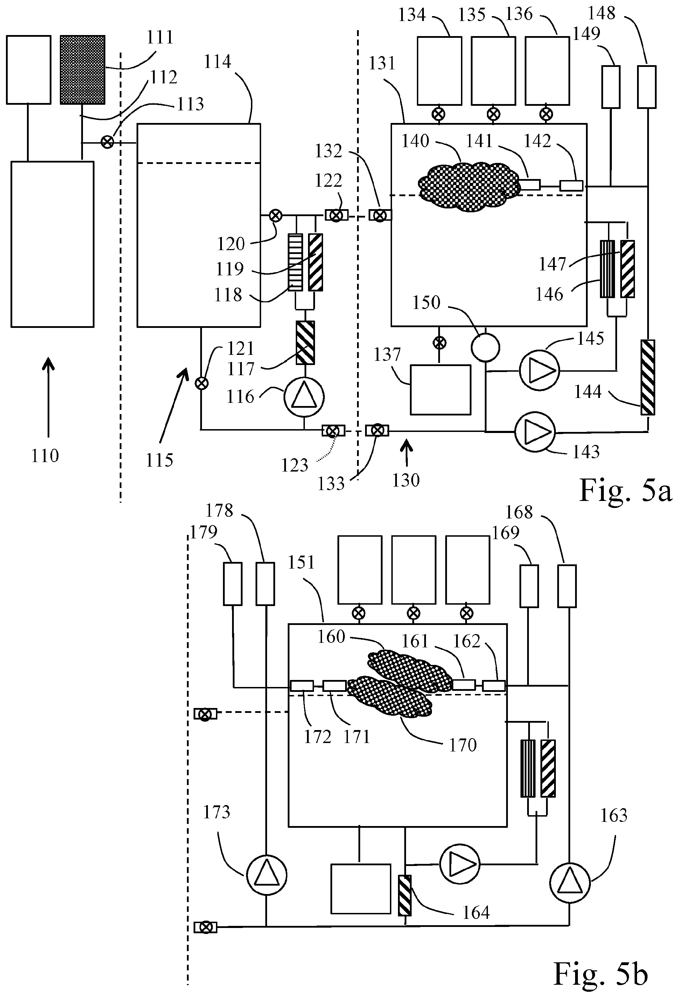

In the main hospital, in which the transplantation may take place, the kidney is further treated. The kidney may stay in the same container 62 or moved to another container 82 as shown in Fig. 5. The container 82 comprises a connector 84 to which the kidney is connected. A pump 89 pumps fluid from the container 82 via a tube 87 to the inlet artery of the kidney and the fluid is emitted to the container 82 via the vein, as described earlier. The pump 89 is pressure controlled and keep the pressure to a desired value, such as 20 to 30 mmHg. A heater/cooler (not shown) maintains the temperature at a desired temperature, such as 12 to 32 °C during perfusion and preservation. A drain bag 85 is connected to the bottom of container 82 via a valve 86.

The device according to Fig. 5 also comprises a red blood cell suspension bag 91. The red blood cell suspension bag is connected to a circulation system comprising three pumps 92, 93, 94 arranged in parallel. A cytokine-filter 95 is arranged in series with pump 92, an endotoxin-filter 96 is arranged in series with pump 93 and an oxygenator 97 and a leukocyte-filter 98 are arranged in series with pump 94. When a suspension valve 99 arranged after the red blood cell suspension bag 81 is opened, the red blood cell suspension is circulated by the pumps 92, 93, 94 through the respective filters 95, 96, 98 and through the oxygenator 97. The circulation may be performed during about 30 minutes at room temperature. In this manner, the red blood cell suspension is conditioned to have endotoxins, cytokines and leukocytes removed. In addition, the red blood cell suspension is oxygenated.

An evaluation solution is present in a bag 101 and is connected to the container 82 via a valve 102. When the valve is opened, the evaluation solution is passed via gravity to the container 82, which is previous emptied to the drain 85 by opening the valve 86. The evaluation solution is heated to a temperature of about 32°C. The evaluation solution is circulated through the kidney by pump 89, whereupon the kidney assumes the temperature of 32°C. Then, the red blood cell suspension is added to the container by opening valve 99 and another two valves 103 and 104 as shown in Fig. 5. When the suspension has been transferred to the container 82 via gravity, the red blood cell suspension valve 99 is closed.

Now, the pumps 92, 93, 94 pumps the fluid present in container 82 through the open valves 104 and 103 and through the filters 95, 96, 98 and through the oxygenator 97. In this manner it is assured that the evaluation fluid does not include any endotoxins, cytokines and leukocytes. In addition, the red blood cells are oxygenated. The kidney can now be evaluated, for example by measuring "blood" parameters, such as paO₂, PaCO₂, HCO₃, oxygen saturation, Hb, Hct, Lactate, Glucose, pH etc. In addition, the kidney can be examined optically. The resistance can be calculated from pump data. Urine production can be examined, including creatinine concentration, if creatinine is added to the evaluation fluid. In this manner, the kidney is examined for suitability for transplantation.

Then, the contents of the container 82 is transferred to drain 85 by opening valve 86. A preservation fluid 105 is introduced into the container 82 by opening valve 106. The preservation fluid is circulated by pump 89 at a pressure of 20 to 30 mmHg and a low temperature of 12 to 15°C for removing all red blood cells. In addition, it happens that the kidney increases its weight, and the preservation fluid comprises albumin for removing excess water accumulated in the kidney. After a storage period of up to 7 days (or longer), the kidney is transplanted.

A further embodiment is shown in Fig. 5a. The apparatus comprises a device 110 for washing a red blood cell (RBC) suspension (not shown in all details). The washed RBC in bag 111 is moved to a conditioning container 114 via a tube 112 and a valve 113. The container 114 comprises a conditioning circuit 115, comprising a first pump 116, an oxygenator 117, an cytokine adsorber 118, a leucocyte filter 118, a first valve 120 and a second valve 121. In addition, a first connector 122 with a valve is connected to the first valve 120 and a second connector 123 with a valve is connected to the second valve 121.

When the first and second valves 120, 121 are open and the valves in connectors 122, 123 are closed, the conditioning circuit operates for conditioning the fluid in container 114, by operating pump 116 for circulating the fluid inside container 114 through the oxygenator 117, the leucocyte filter 119 and the cytokine adsorber 118 for removing leucocytes and cytokines in the RBC suspension present inside the container 114. When the circulation has taken place for at least 30 minutes, such as 60 minutes or more, the RBC suspension is prepared.

A treatment system 130 is shown to the right in Fig. 5a. The treatment system comprises a treatment container 131 having a third valved connector 132 which may be connected to the first valved connector 122 and a fourth valved connector 133 which may be connected to the second valved connector 123.

The treatment container 131 comprises three fluid bags 134, 135, 136 which are connected to the container 131 via tubes provided with valves. By opening such valves, the fluids of the corresponding fluid bag can be emptied into the treatment container. A waste bag 137 is connected to the bottom of treatment container via a tube provided with a valve. By opening the valve, the fluid in container 131 may be emptied to the waste bag 137.

A harvested kidney 140 (kidneys) is provided with a kidney connector 141 connecting to the aorta residue or renal artery (arteries). The kidney connector 141 may connect to a container connector 142 provided in the container. The container connector 142 is connected to a kidney circulation system comprising a circulation pump 143 and an oxygenator 144. The pump 143 circulates fluid in the treatment container from lower portion thereof via said pump and oxygenator to said container connector 142 and to the artery of the kidney 140. The fluid emitted from the kidney vein is let out to the interior of the container for further circulation.

A conditioning system comprises a second pump 145 connected to the bottom of the treatment container 131 for pumping the fluid in the treatment container 131 through an endotoxin adsorber 146 and a leucocyte filter 147 and back to the treatment container.

Two medical infusion pumps 148, 149 are arranged for infusing medical agents into the flow to the artery of the kidney. The infusion pumps may be syringe pumps. The medical agents to be infused may be lys-plasminogen, tPA, ATIII, a platelet inhibitor, a thrombin inhibitor, a coagulation inhibitor, etc. The medical infusion pumps 148, 149 may be exchangeable, so that further syringe pumps may be connected.

A heater/cooler 150 is arranged for heating/cooling the fluid passing out of the treatment container.

The operation of the system may be the following:
An RBC suspension is washed in the washing system 110 according to known methods. When the washing is ready, the RBC suspension is transferred to conditioning container 114 by gravity by opening valve 113.

The fluid in conditioning container 114 is circulated by pump 116 by opening valves 120 and 121 and operating pump 116 to circulate the fluid through the leucocyte filter 119 and the cytokine adsorber 118, thereby removing remaining leucocytes and cytokines.

In the meantime, a kidney 140 is harvested and placed in the treatment container 131 and connected to the container connector 142 via kidney connector 141. This operation may be performed at a distance from the left portion of the system shown in Fig. 5a, for example at a remote hospital.

The treatment container 131 is provided with treatment fluid from fluid bags 134, 135, 136 as required. When used, the fluid is expelled to waist bag 137 by opening the waste valve.

The circulation second pump 145 is operated in order to pass the fluid in the treatment container through the leucocyte filter 147 and the endotoxin adsorber 146 for continuously removing leucocytes and endotoxin.

The circulation pump 143 is operated in order to circulate fluid from the container via oxygenator 144 and to the artery of the kidney and further via the kidney vein back to the container for treatment of the kidney, as outlined above.

The medical agent pumps 148, 149 may be used for addition of medical agents.

Then, the treatment system 130 is docked to the conditioning system 115 by connecting valved connector 122 to valved connector 132 and valved connector 123 to valved connector 133 and opening the valves, except valve 123. The first valve 120 is closed and the second valve 121 is opened, whereupon the pump 116 is operated for pumping the fluid in conditioning container 114 via the connectors 122, 132 to the treatment container. Then, the second valve 121 is closed and valve 123 is opened, whereupon the pump 116 circulates the treatment fluid in the treatment container 131 through the oxygenator 117, the leucocyte filter 119 and the cytokine adsorber 118.

The treatment may be according to any one of the methods mentioned above.

As shown in Fig. 5b, the treatment container 151 may be modified to treat two kidneys separately, although they may be arranged en-block. The two kidneys are provided with two kidney connectors 161, 171 connected to container connectors 162, 172, which are connected to circulation pumps 163, 173 as shown. An oxygenator 164 is connected in a common line for the two circulation systems as shown. With this system, each separate kidney can be provided with separate medical agents via medical infusion pumps 168, 169 and 178, 179 for different treatments.

### Example 1 (not according to the invention).

Procedure before retrieval: 30 pigs were anaesthetized and allowed to achieve normoventilation, after which the ventilator was turned off. Asystole and circulatory arrest appeared after about 15 minutes. After two hours in room temperature, cold Saline was installed in the abdominal and the thoracic cavities after which no further action was undertaken during one hour.

Retrieval: Three hours after circulatory arrest, surgery was started to retrieve kidneys, which took a mean of 45 minutes.

Backtable procedure: The kidneys were flushed through the renal artery on backtable with SOLTRAN (Kidney perfusion fluid, Baxter Healthcare) after injection of about 500 U Heparin in 10ml of Lidocaine 0.5 to 1% diluted to 20ml with 0.9 % Saline, per kidney.

Treatment procedure: The kidneys were divided in four groups: Group A with 11 pigs, Group B with 13 pigs, Group C with only one kidney from each 6 pigs and Group D with the other kidney of the same 6 pigs.

Group A was treated with cold storage for 2 hours followed by transplantation.

Group B was treated with cold storage for 2 hours followed by 90 minutes of reconditioning at 37°C using a solution with the composition shown in Table B and mixed with washed RBCs to a hct of about 15 followed by transplantation.

| **TABLE B** | | | | | | | | |
|---|---|---|---|---|---|---|---|---|
| **COMPONENT** | | **g/L** | **mM** | | **Vitamins** | | **g/L** | **mM** |
| **Inorganic Salts** | | | | | L-Ascorbic Acid • Na | | 0.05 | 0.284 |
| CaCl₂ • 2H₂O | | 0.263 | 2.3698 | | D-Biotin | | 0.0001 | 0.00041 |
| MgSO₄ (anhydrous) | | 0.09767 | 0.81144 | | Choline Chloride | | 0.001 | 0.00716 |
| KCl | | 0.4 | 5.36543 | | Folic Acid | | 0.001 | 0.00227 |
| NaHCO₃ | | 4.72 | 56.18606 | | myo-Inositol | | 0.002 | 0.0111 |
| NaCl | | 6.8 | 116.35269 | | Niacinamide | | 0.001 | 0.00819 |
| Na₂HPO₄ (anhydrous) | | 0.122 | 0.8594 | | D-Panthothenic Acid • ½Ca | | 0.001 | 0.00210 |
| **Amino acids** | | | | | Pyridoxinhydrochloride | | 0.001 | 0.00486 |
| L-Alanine | | 0.025 | 0.2806 | | Riboflavin | | 0.0001 | 0.000266 |
| L-Arginine • HCl | | 0.126 | 0.72329 | | Thiamine • HCl | | 0.001 | 0.00296 |
| L-Asparagine • H₂O | | 0.05 | 0.37845 | | Vitamin B12 | | 0.00136 | 0.00136 |
| L-Aspartic Acid | | 0.03 | 0.22539 | | Other | | | |
| L-Cysteine • HCl • H₂O | | 0.1 | 0.00186 | | Adenosine | | 0.01 | 0.03742 |
| L-Cystine • 2HCl | | 0.0313 | 0.0999 | | Cytidine | | 0.01 | 0.04112 |
| L-Glutamic Acid | | 0.075 | 0.50975 | | 2'Deoxyadenosine | | 0.01 | 0.0398 |
| L-Glutamine | | 0.292 | 2.00 | | 2'Deoxycytidine • HCl | | 0.011 | 0.04841 |
| Glycine | | 0.05 | 0.66607 | | 2'Deoxyguanosine | | 0.01 | 0.03742 |
| L-Histidine • HCl • H₂O | | 0.042 | 0.200 | | Guanosine | | 0.11 | 0.03531 |
| L-Isoleucine | | 0.052 | 0.396 | | Pyruvic Acid | | 0.11 | 1.249 |
| L-Leucine | | 0.052 | 0.396 | | Thioctic Acid | | 0.0002 | 0.00097 |
| L-Lysine • HCl | | 0.0725 | 0.397 | | Thymidine | | 0.01 | 0.04111 |
| L-Methionine | | 0.015 | 0.101 | | Uridine | | 0.01 | 0.04095 |
| L-Phenylalanine | | 0.032 | 0.194 | | **Hormones** | | | |
| L-Proline | | 0.04 | 0.34743 | | T3 | | 0.000000001953 | 0.000000030 |
| L-Serine | | 0.025 | 0.00023564 | | T4 | | 0.00000000233 | 0.000000030 |
| L-Threonine | | 0.048 | 0.403 | | Cortisol | | 0.000006 | 0.0000166 |
| L-Tryptophan | | 0.01 | 0.0490 | | Insulin Novorapid | | 5U | |
| L-Tyrosine • 2Na • 2H₂O | | 0.0519 | 0.199 | | Minirin | | 0.00000001 | 0.000000009 |
| L-Valine | | 0.046 | 0.393 | | **Drugs** | | | |
| | | | | | Verapamil | | 0.005 | |
| | | | | | Tienam | | 0.050 | |
| | | | | | Heparin | | 500U | |

Group C was treated by hypothermic perfusion during 4 hours directly after retrieval of the kidney using LifePort Kidney Transporter and KPS (Kidney Perfusion Solution) according to the manufacturer's (Organ Recovery Systems) instructions, followed by transplantation.

Group D was kidneys from the same donors as Group C but treated with cold storage for 2 hours, followed by transplantation.

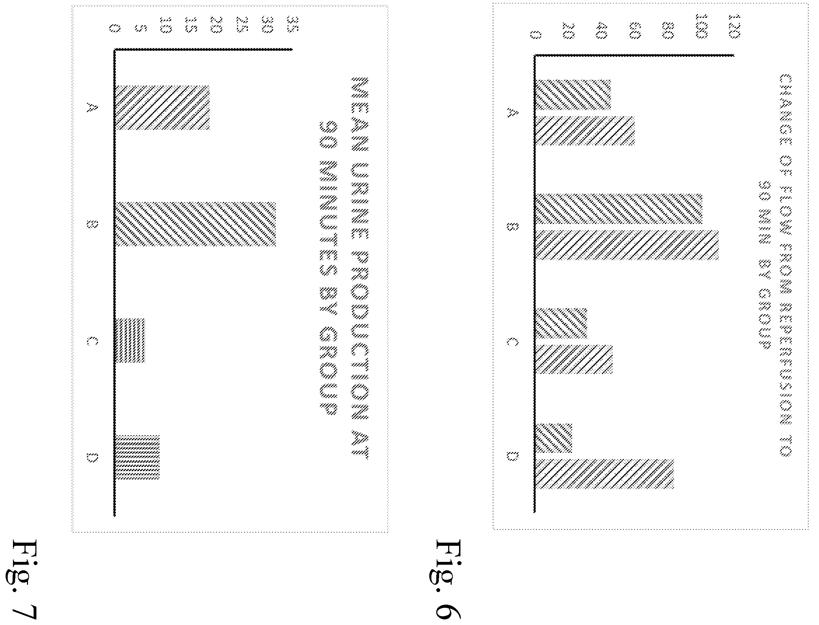

Fig. 6 shows the change of arterial blood flow (ml/min) after reperfusion and after 90 minutes' observation after transplantation.

Fig. 7 shows mean urine production in ml/min, 90 minutes after transplantation. Using Mann-Whitney U test, the flow was better in the reconditioned group B at reperfusion (p<0,05) (Fig. 6) and the reconditioned group B also had better urine production (p<0,05) 90 minutes after transplantation (Fig. 7).

### Example 2 (not according to the invention)

6 pigs were anaesthetized and allowed to achieve normoventilation, after which the ventilator was turned off. Asystole appeared after about 15 minutes. After two hours in room temperature, cold preservation solution (Saline) was installed in the abdominal and the thoracic cavities.

Retrieval of the kidneys was started 4 hours after death.

The kidneys were flushed on backtable with cold Ringer solution after injection of about 500 U of Heparin in 10 ml of Lidocaine 0.5 to 1% diluted to 20 ml with 0.9% Saline, per kidney through the renal artery.

The kidneys were connected to an ex-vivo perfusion device of the type shown in Fig. 3. 0.4mg of tPA (alteplas) and 150U of apyrase (Sigma Aldrich, purinergic drug - CD39/CD73) was injected through the renal artery. The composition of the solution used can be seen in Table C.

The solution was perfused during 30 minutes at a temperature of 15°C and a pressure of 20 mmHg without oxygenation. Temperature was then raised to 32°C, pressure to 30 mmHg, and perfusion was continued for another 90 minutes in a reconditioning phase. Then washed leucocyte filtered RBCs were added and the perfusion continued for another 90 minutes during evaluation.

Then the kidney was transplanted.

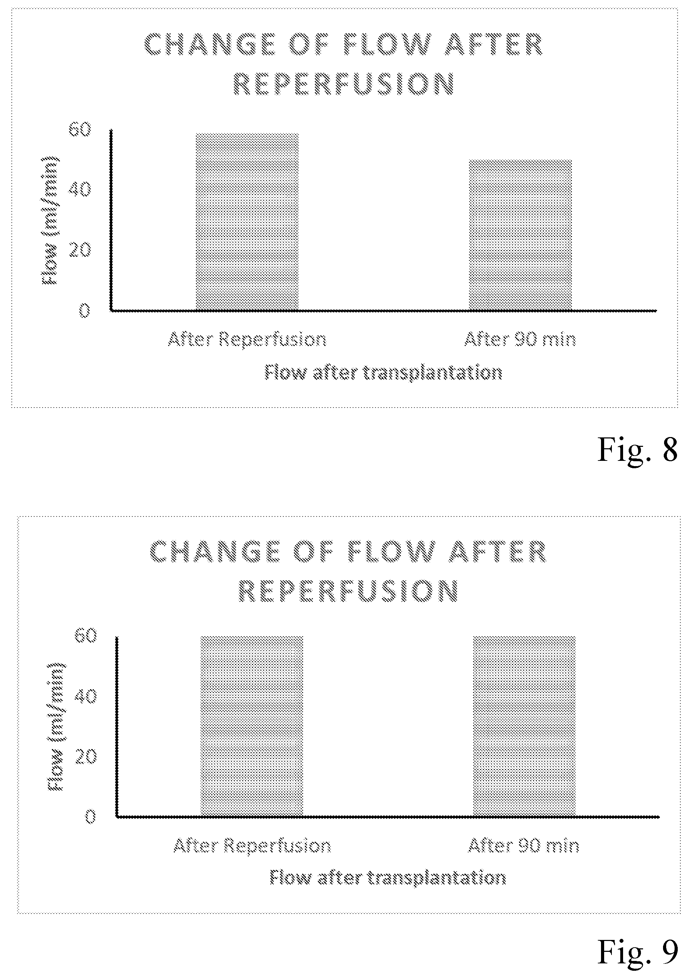

Fig. 8 shows the renal flows after reperfusion and after 90 minutes. Kidneys did not clear the microcirculation completely and showed perfusion defects on the surface of the kidneys. Fibrinolytic drugs as well as purinergic drugs (apyrase - CD39/CD73) - added to the ex-vivo system did not substantially improve the vascular resistance and flow.

| **TABLE C** | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ • 2H₂O | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-Inositol | | 0.002 | 0.0111 |
| NaHCO₃ | | 4.15 | 49.40 | | Niacinamide | | 0.001 | 0.00819 |
| Sodium Gluconate | | 21.80 | 100.00 | | D-Panthothenic Acid • ½Ca | | 0.001 | 0.00210 |
| **Amino acids** | | | | | Pyridoxinhydrochloride | | 0.001 | 0.00486 |
| L-Glutamine | | 0.292 | 2.00 | | Riboflavin | | 0.0001 | 0.000266 |
| L-Arginine • HCl | | 0.105 | 0.603 | | Thiamine • HCl | | 0.001 | 0.00296 |
| L-Cystine • 2HCl | | 0.0313 | 0.0999 | | **Other** | | | |
| L-Histidine • HCl • H₂O | | 0.042 | 0.200 | | Adenine | | 0.68 | 5.00 |
| L-Isoleucine | | 0.052 | 0.396 | | Dextrose | | 1.00 | 5.55 |
| L-Leucine | | 0.052 | 0.396 | | D-Ribose | | 0.75 | 5.00 |
| L-Lysine • HCl | | 0.0725 | 0.397 | | Albumin | | 72 | |
| L-Methionine | | 0.015 | 0.101 | | Minirin | | 0.00000001 | |
| L-Phenylalanine | | 0.032 | 0.194 | | Verapamil | | 0.005 | |
| L-Proline | | 0.04115 | 0.100 | | Tienam | | 0.050 | |
| L-Threonine | | 0.048 | 0.403 | | Heparin | | 500 U | |
| L-Tryptophan | | 0.01 | 0.0490 | | Apyrase | | 150 U | |
| L-Tyrosine • 2Na • 2H₂O | | 0.0519 | 0.199 | | Alteplas | | 0.4mg | |
| L-Valine | | 0.046 | 0.393 | | **Hormones** | | | |
| | | | | | T3 | | 0.000000001953 | 0.000000030 |
| | | | | | T4 | | 0.00000000233 | 0.000000030 |
| Sterile water | | | | | Cortisol | | 0.000006 | 0.0000166 |
| | | | | | Insulin Novorapid | | 5U | |
| | | | | | Progesterone | | 0.00315 | 0.001002 |
| | | | | | Estrogen | | 0.00001 | 0.00004 |

### Example 3 (not according to the invention)

In another experiment the protocol in Example 2 was repeated, but apyrase was not given. Instead Lidocaine was added to the perfusion solution. The idea was to look for stabilizing effects during the reconditioning phase, as a result of the effect on the Na⁺ K⁺ pump that Lidocaine has shown to have. The composition of the solution can be seen in Table D.

| **TABLE D** | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ **•** 2H₂O | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-Inositol | | 0.002 | 0.0111 |
| NaHCO3 | | 4.15 | 49.40 | | Niacinamide | | 0.001 | 0.00819 |
| Sodium Gluconate | | 21.80 | 100.00 | | D-Panthothenic Acid • ½Ca | | 0.001 | 0.00210 |
| **Amino acids** | | | | | Pyridoxin hydrochloride | | 0.001 | 0.00486 |
| L-Glutamine | | 0.292 | 2.00 | | Riboflavin | | 0.0001 | 0.000266 |
| L-Arginine • HCl | | 0.105 | 0.603 | | Thiamine • HCl | | 0.001 | 0.00296 |
| L-Cystine • 2HCl | | 0.0313 | 0.0999 | | **Other** | | | |
| L-Histidine • HCl • H2O | | 0.042 | 0.200 | | Adenine | | 0.68 | 5.00 |
| L-Isoleucine | | 0.052 | 0.396 | | Dextrose | | 1.00 | 5.55 |
| L-Leucine | | 0.052 | 0.396 | | D-Ribose | | 0.75 | 5.00 |
| L-Lysine • HCl | | 0.0725 | 0.397 | | Albumin | | 72 | |
| L-Methionine | | 0.015 | 0.101 | | Minirin | | 0.00000001 | |
| L-Phenylalanine | | 0.032 | 0.194 | | Verapamil | | 0.005 | |
| L-Proline | | 0.04115 | 0.100 | | Tienam | | 0.050 | |
| L-Threonine | | 0.048 | 0.403 | | Heparin | | 500 U | |
| L-Tryptophan | | 0.01 | 0.0490 | | Lidocain | | 0.060 | 0.256 |
| L-Tyrosine • 2Na • 2H2O | | 0.0519 | 0.199 | | **Hormones** | | | |
| L-Valine | | 0.046 | 0.393 | | T3 | | 0.000000001953 | 0.000000030 |
| | | | | | T4 | | 0.00000000233 | 0.000000030 |
| | | | | | Cortisol | | 0.000006 | 0.0000166 |
| Sterile water | | | | | Insulin Novorapid | | 5U | |
| | | | | | Progesterone | | 0.00315 | 0.001002 |
| | | | | | Estrogen | | 0.00001 | 0.00004 |

Fig. 9 shows an unchanged flow during the first 90 minutes, which usually is decreasing. Furthermore, the weight change was minimal between the different phases of the reconditioning despite the fact that the osmolarity was 330 mosm and the potassium level about Smmol/L. In Example 2 kidneys gained significantly more in weight from start of perfusion and to end after 90 min of reperfusion.

### Example 4 (not according to the invention)

7 pigs were anaesthetized and allowed to achieve normoventilation, after which the ventilator was turned off. Asystole appeared after about 15 minutes. After two hours in room temperature, cold preservation solution (Saline) was installed in the abdominal and the thoracic cavities.

Retrieval of both kidneys of each pig was started 4 hours after death.

The kidneys were flushed on backtable with cold Ringer solution after injection of about 500 U of Heparin in 10 ml of Lidocaine 0.5 to 1% diluted to 20 ml with 0.9% Saline, per kidney through the renal artery as described in Example 2. The composition of the solution used can be seen in Table E.

| **TABLE E** | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ • 2H₂O | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-Inositol | | 0.002 | 0.0111 |
| NaHCO₃ | | 4.15 | 49.40 | | Niacinamide | | 0.001 | 0.00819 |
| Sodium Gluconate | | 21.80 | 100.00 | | D-Panthothenic Acid • ½Ca | | 0.001 | 0.00210 |
| **Amino acids** | | | | | Pyridoxinhydrochloride | | 0.001 | 0.00486 |
| L-Glutamine | | 0.292 | 2.00 | | Riboflavin | | 0.0001 | 0.000266 |
| L-Arginine • HCl | | 0.105 | 0.603 | | Thiamine • HCl | | 0.001 | 0.00296 |
| L-Cystine • 2HCl | | 0.0313 | 0.0999 | | **Other** | | | |
| L-Histidine • HCl • H2O | | 0.042 | 0.200 | | Adenine | | 0.68 | 5.00 |
| L-Isoleucine | | 0.052 | 0.396 | | Dextrose | | 1.00 | 5.55 |
| L-Leucine | | 0.052 | 0.396 | | D-Ribose | | 0.75 | 5.00 |
| L-Lysine • HCl | | 0.0725 | 0.397 | | Albumin | | 72 | |
| L-Methionine | | 0.015 | 0.101 | | Minirin | | 0.00000001 | |
| L-Phenylalanine | | 0.032 | 0.194 | | Verapamil | | 0.005 | |
| L-Proline | | 0.04115 | 0.100 | | Tienam | | 0.050 | |
| L-Threonine | | 0.048 | 0.403 | | Heparin | | 500 U | |
| L-Tryptophan | | 0.01 | 0.0490 | | **Hormones** | | | |
| L-Tyrosine • 2Na • 2H2O | | 0.0519 | 0.199 | | T3 | | 0.000000001953 | 0.000000030 |
| L-Valine | | 0.046 | 0.393 | | T4 | | 0.00000000233 | 0.000000030 |
| | | | | | Cortisol | | 0.000006 | 0.0000166 |
| | | | | | Insulin Novorapid | | 5U | |
| Sterile water | | | | | Progesterone | | 0.00315 | 0.001002 |
| | | | | | Estrogen | | 0.00001 | 0.00004 |

The kidneys were perfused during 30 minutes ex-vivo, first at 15°C and a pressure of 20 mmHg. Then, the perfusion solution was oxygenated with start using a gas mixture of O₂ (20%), CO₂ (5,6%) and N₂ (74,4%). After one hour the solution was exchanged with new solution with the composition according to Table E, the temperature was raised to 32°C and the pressure was adjusted to 30 mmHg. Washed leucocyte filtered RBCs were added to a hct of about 10 to 15, followed by perfusion during 5 hours. One kidney was then taken out from the perfusion system, transplanted (n=7) into a recipient pig and observed for 90 minutes up to 8 hours. The remaining kidney in the ex-vivo perfusion system was perfused for another 90 minutes for comparison.

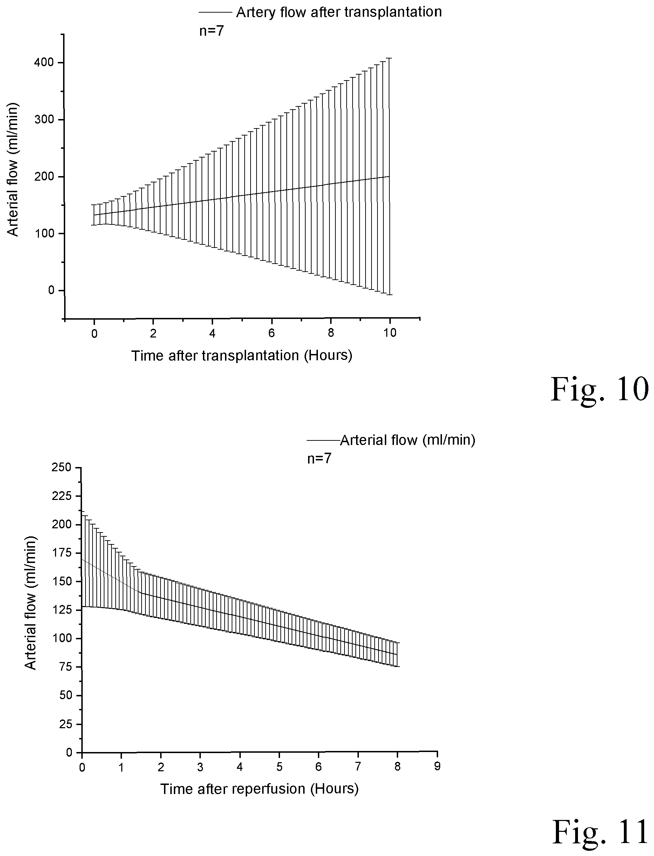

Fig. 10 shows renal arterial blood flow after transplantation. Kidneys were functioning, producing urine, for more than ten hours (n=3). Only few animals were followed up to ten hours which explains the increased spread in flows. Experiments terminated with pigs still under anesthesia.

### Example 5 (not according to the invention)

In another experiment, treatment was given according to the same protocol as in Example 4 (n=5), but ex-vivo perfusion was continued for 11 hours instead of 6 hours. Flow was 104 ml/min at reperfusion and 109 ml/min 14.5 hours after reperfusion. Thus, even extending the perfusion time can result in significant flows, allowing time for transportation of the kidneys and waiting for recipients to arrive.

| **TABLE F** | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ • 2H₂O | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-Inositol | | 0.002 | 0.0111 |
| NaHCO₃ | | 4.15 | 49.40 | | Niacinamide | | 0.001 | 0.00819 |
| Sodium Gluconate | | 21.80 | 100.00 | | D-Panthothenic Acid • ½Ca | | 0.001 | 0.00210 |
| **Amino acids** | | | | | Pyridoxinhydrochloride | | 0.001 | 0.00486 |
| L-Glutamine | | 0.292 | 2.00 | | Riboflavin | | 0.0001 | 0.000266 |
| L-Arginine • HCl | | 0.105 | 0.603 | | Thiamine • HCl | | 0.001 | 0.00296 |
| L-Cystine • 2HCl | | 0.0313 | 0.0999 | | **Other** | | | |
| L-Histidine • HCl • H2O | | 0.042 | 0.200 | | Adenine | | 0.68 | 5.00 |
| L-Isoleucine | | 0.052 | 0.396 | | Dextrose | | 1.00 | 5.55 |
| L-Leucine | | 0.052 | 0.396 | | D-Ribose | | 0.75 | 5.00 |
| L-Lysine • HCl | | 0.0725 | 0.397 | | Albumin | | 80 | |
| L-Methionine | | 0.015 | 0.101 | | Minirin | | 0.00000001 | |
| L-Phenylalanine | | 0.032 | 0.194 | | Verapamil | | 0.005 | |
| L-Proline | | 0.04115 | 0.100 | | Tienam | | 0.050 | |
| L-Threonine | | 0.048 | 0.403 | | Heparin | | 500 U | |
| L-Tryptophan | | 0.01 | 0.0490 | | **Hormones** | | | |
| L-Tyrosine • 2Na • 2H2O | | 0.0519 | 0.199 | | T3 | | 0.000000001953 | 0.000000030 |
| L-Valine | | 0.046 | 0.393 | | T4 | | 0.00000000233 | 0.000000030 |
| | | | | | Cortisol | | 0.000006 | 0.0000166 |
| | | | | | Insulin Novorapid | | 5U | |
| | | | | | Progesterone | | 0.00315 | 0.001002 |
| Sterile water | | | | | Estrogen | | 0.00001 | 0.00004 |

### Example 6 (not according to the invention)

In another experiment 7 pigs were declared dead according to the same protocol as in Example 4. Warm ischemia time (WIT) was 4 to 6 hours

Both kidneys per pig were retrieved starting 4 hours after death.

Ex-vivo perfusion started at 15°C.. During the first hour, 72 g albumin/L was used (solution according to Table E) and the pressure during perfusion was 20 mmHg. Oxygenation was started after 30 minutes. After 1 hour, the solution was drained and a new solution with 80 g albumin/L, (solution according to Table F) was used during 2 hours after raising the temperature to 32°C, pressure to 30 mmHg and addition of RBCs.

Fig. 11 shows the renal artery blood flow after transplantation. All seven kidneys showed good flows for 4 hours (118.7 ± 15.0 ml/min) and 8 hours (85.0 ± 10.5 ml/min) after kidney transplantation and maintained urine production. Experiments terminated after 8 hours with pigs still under anesthesia. Although the flow was declining during the observation time, the kidneys still had a good flow at the end of the observation. The ethical permit did not allow us to let the pigs wake up

| **TABLE G** | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ • 2H₂O | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-Inositol | | 0.002 | 0.0111 |
| NaHCO3 | | 4.15 | 49.40 | | Niacinamide | | 0.001 | 0.00819 |
| Sodium Gluconate | | 21.80 | 100.00 | | D-Panthothenic Acid • ½Ca | | 0.001 | 0.00210 |
| **Amino acids** | | | | | Pyridoxinhydrochloride | | 0.001 | 0.00486 |
| L-Glutamine | | 0.292 | 2.00 | | Riboflavin | | 0.0001 | 0.000266 |
| L-Arginine • HCl | | 0.105 | 0.603 | | Thiamine • HCl | | 0.001 | 0.00296 |
| L-Cystine • 2HCl | | 0.0313 | 0.0999 | | **Other** | | | |
| L-Histidine • HCl • H2O | | 0.042 | 0.200 | | Adenine | | 0.68 | 5.00 |
| L-isoleucine | | 0.052 | 0.396 | | Dextrose | | 1.00 | 5.55 |
| L-Leucine | | 0.052 | 0.396 | | D-Ribose | | 0.75 | 5.00 |
| L-Lysine • HCl | | 0.0725 | 0.397 | | Albumin | | 57 | |
| L-Methionine | | 0.015 | 0.101 | | Minirin | | 0.00000001 | |
| L-Phenylalanine | | 0.032 | 0.194 | | Verapamil | | 0.005 | |
| L-Proline | | 0.04115 | 0.100 | | Tienam | | 0.050 | |
| L-Threonine | | 0.048 | 0.403 | | Heparin | | 500 U | |
| L-Tryptophan | | 0.01 | 0.0490 | | **Hormones** | | | |
| L-Tyrosine • 2Na • 2H2O | | 0.0519 | 0.199 | | T3 | | 0.000000001953 | 0.000000030 |
| L-Valine | | 0.046 | 0.393 | | T4 | | 0.00000000233 | 0.000000030 |
| | | | | | Cortisol | | 0.000006 | 0.0000166 |
| | | | | | Insulin Novorapid | | 5U | |
| Sterile water | | | | | Progesterone | | 0.00315 | 0.001002 |
| | | | | | Estrogen | | 0.00001 | 0.00004 |

### Example 7 (not according to the invention)

In another experiment, 4 pigs were declared dead according to the same protocol as in Example 4. Topical cooling using ice in the abdomen was used after 2 hours, resulting a change of body temperature from 37°C to about 20°C compared to 25°C to 29 °C using fluid as coolant.

The kidneys were retrieved, whereby the WIT varied between 4 to 5 hours.

The kidneys were rinsed with a composition of the solution described in Table G with 57g albumin/L as hyperoncotic agent. The kidneys were rinsed in an ex-vivo device using a pressure of 20 mmHg up to 70 mmHg, raising the pressure 5 mmHg every 5 minutes, and a temperature of 18°C until the kidneys turned white. It took on average 2 to 3 liters of solution and up to 50 minutes to achieve well perfused kidneys.

Using the same solution, temperature was reduced to 12°C and the kidneys were perfused during 1 hour at 20 mmHg. Solution was then changed to a solution comprising 80 g albumin /L as seen in Table F, temperature 28°C and pressure of 30 mmHg. RBCs were added to a final hct of about 10 to 15. The kidneys were perfused with this solution for 2 hours. The temperature was then increased to 32°C and the kidneys were perfused for an additional hour before draining the system and adding a solution comprising 57g albumin/L initially used again. With this solution, perfusion was continued for 30 minutes at 15°C and a pressure of 20 mmHg before transplantation.

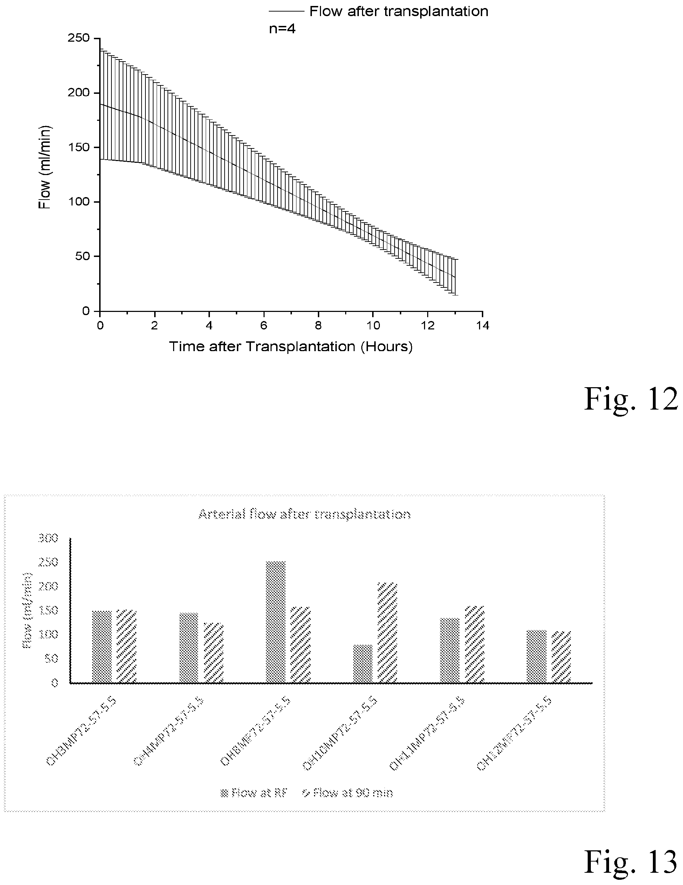

Fig. 12 shows the renal artery flow after transplantation. High flows after reperfusion could be achieved after careful rinsing of the kidneys after retrieval. Urine production could be maintained for extended time in the recipients but declined after extended observation time, indicating that flush with volumes of several liters may negatively influence late outcome due to endothelial activation. Still, at 4 hours (145.7 ± 29.3 ml/min), and 8 hours (96.73± 12.8 ml/min) flow was better than with topical cooling with cold preservation solution installed in the abdominal and the thoracic cavities as in previous Examples 1 to 5 achieving temperatures of 25°C to 29 °C. The experiment was terminated with pigs still under anesthesia due to the ethical permit.

### Example 8 (according to the invention)

In another experiment 8 pigs were declared dead as described above in Example 4, however, no topical cooling was given.

The kidneys were retrieved 4 hours after death and were perfused on backtable with 200 to 500 ml of Perfadex. All showed poor to moderately poor perfusion and poorly cleared kidneys.

The kidneys were then transplanted immediately to nephrectomized pigs. Mean flow at reperfusion was 14.15 ml/min and at 90 minutes 36.8 ml/min. All kidneys looked bluish/black at 90 minutes, with no urine production at the end. This experiment served as control, showing that without any cooling procedure, and other treatments, for example according to embodiments of the present invention, a WIT of 4 hours result in poor performance in a transplant setting, in accordance with previous experience.

### Example 9 (according to the invention)

In another experiment six pigs were declared dead using the above technique. Topical cooling using ice slush inserted into the abdomen was used after 2 hours, resulting in a change of body temperature from 37°C to about 10 to 12°C compared to 25 to 29°C using fluid as coolant and 20°C using ice.

The kidneys were retrieved with a WIT which varied between 4 to 5 hours.

On the backtable and after retrieval, 20 ml of a solution comprising 72 g/L albumin solution (Table I) mixed with 10U of lys-plasminogen and 200 U of antithrombin III (ATIII) was inject in

| **TABLE H** | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ • 2H₂O | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-inositol | | 0.002 | 0.0111 |
| NaHCO3 | | 4.15 | 49.40 | | Niacinamide | | 0.001 | 0.00819 |
| Sodium Gluconate | | 17.451 | 80.00 | | D-Panthothenic Acid • ½Ca | | 0.001 | 0.00210 |
| Potassium Gluconate | | 4.685 | 20.00 | | Pyridoxinhydrochloride | | 0.001 | 0.00486 |
| **Amino acids** | | | | | Riboflavin | | 0.0001 | 0.000266 |
| L-Glutamine | | 0.292 | 2.00 | | Thiamine • HCl | | 0.001 | 0.00296 |
| L-Arginine • HCl | | 0.105 | 0.603 | | **Other** | | | |
| **Hormones** | | | | | Adenine | | 0.68 | 5.00 |
| T3 | | 0.000000001953 | 0.000000030 | | Dextrose | | 1.00 | 5.55 |
| **T4** | | 0.00000000233 | 0.000000030 | | D-Ribose | | 0.75 | 5.00 |
| Insulin Novorapid | | 5U | | | Albumin | | 57 | |
| Progesterone | | 0.00315 | 0.001002 | | Tienam | | 0.050 | |
| Estrogen | | 0.00001 | 0.00004 | | Sterile water | | | |

each kidney through the renal artery after clamping off the veins and then the arteries after the solution had been delivered.

The kidneys were moved to an ex-vivo device. After 15 minutes, 1 mg tPA (alteplas) and 100 U of ATIII per kidney was injected, divided in 4 portions of 5ml, after dilution into 20 ml of the solution comprising 72 g/L albumin solution (Table I). The tPA was injected into the renal artery with 5 min apart at a temperature of 20°C, starting with 20 mmHg and increasing 5 mmHg each time.

After completion of infusion of the tPA, the kidneys were perfused with a solution comprising 72 g albumin/L and the pressure was increased every 5 minutes with 5 mmHg each time up to 50 to 70 mmHg or until the kidneys cleared - whichever came first. Temperature was then lowered to 12°C and the perfusion continued for 1 hour at a perfusion pressure of 20 mmHg.

After rinsing with a solution comprising 57g/L albumin (Table H), a second dose of lys-plasminogen followed by tPA and ATIII was given, diluted in the solution with 57 g albumin/L and given sequentially through the artery as described above.

Then, the perfusion was continued for 30 minutes, pressure 20 mmHg, temperature 12°C. The temperature was increased to 28°C and a pressure of 30 mmHg, before addition of RBCs to a hct of 5 to 10. The RBCs had been pretreated during 2 hours by an external pump and circulated through a leucocyte filter before being added to the solution. This was done to allow leucocytes to decrease before being in contact with the kidneys. Perfusion using the combined albumin solution (57 g albumin /L, Table H) and RBCs was continued for 1 hour. Temperature was then raised to 37 °C and pressure to 70 to 90 mmHg for one hour during evaluation. After rinsing of the kidneys from RBC containing solution, filling with new 57g/L albumin solution and lowering the temperature to 15°C, transplantation took place.

Transplantation was performed into pigs where the native kidneys had been nephrectomized immediately before the kidney transplant. Three animals were allowed to wake up from anesthesia (new ethical permit allowing ten days' observation). One animal was explored on day three for inspection of the kidney and new blood samples. The only immunosuppression given was steroids at reperfusion. The kidney looked good, creatinine in blood was 615 µmol/L. Another pig was explored on the 4^{th} day, kidney looked good as well, creatinine in blood was 884 µmol/L. The third pig was taken sample from on day 5 and followed for 8 days in total. All three pigs showed signs of delayed graft function (DGF) in one case resulting in uremia and death after 8 days, in two other cases animals were sacrificed on day 3 and 4 with elevated creatinine in blood and higher creatinine in urine as signs of ability to concentrate urine.

Fig. 13 shows arterial flow for each of the six pigs, after reperfusion and after 90 minutes. Adding lys-plasminogen and tPA cleared the kidneys better than seen before, with decrease of resistance and improved microcirculation as result.

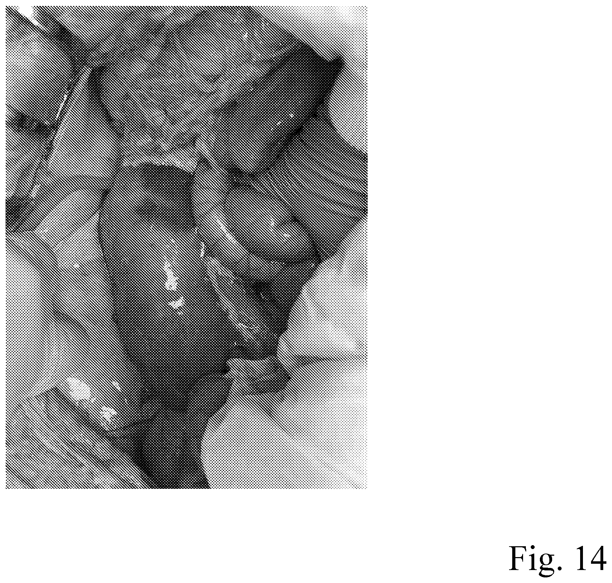

Fig. 14 shows that some kidneys showed patches on the surface after reperfusion, sometimes developing to blue/black poorly perfused kidneys a few hours after transplantation, indicating either a re-thrombosis due to the coagulation system or a platelet/RBC induced action on the endothelium.

### Example 10 (not according to the invention)

In three more pigs the protocol in Example 9 was repeated with a few exceptions.

After retrieval and on the backtable, injection of lys-plasminogen was performed as mentioned above. After 15 minutes, 2 mg of tPA (alteplas) in 500 ml of a solution comprising 57g albumin/L (Table H), was flushed through the kidneys before they were taken to the ex-vivo device.

At the ex-vivo device, the kidneys were perfused in a solution comprising 72 g/L albumin (Table I) at 24°C with increasing pressure from 20 up to between 50 and 70 mmHg. Using the same solution, the perfusion continued for 2 hours at 12°C and pressure of 20 mmHg.

After draining and rinsing, a solution comprising 57 g albumin/L (Table H) was added together with washed RBCs to a hct of about 5 to 10, temperature changed to 28°C, pressure to 30 mmHg. A new dose of lys-plasminogen, tPA 2mg and ATIII 200U was added and temperature was increased to 32°C followed by perfusion for 15 min at a pressure of 70 mmHg for evaluation. After rinsing and washing, a solution comprising 57 g/L albumin (Table H) was added and temperature decreased to 15°C. All three pigs were taken off anesthesia and observed. Two animals were surviving for 10 days, one with 166 µmol/L and the other with 174 µmol/L creatinine in blood with normal looking kidney at termination of the experiment. The third pig was sacrificed on day 6 with delayed graft function, having a creatinine in blood of 1231 µmol/L but over 2000 µmol/L in urine, showing ability to concentrate urine. All recipients received steroids as the only mean of immunosuppression. Sample were collected for histological studies of allorejection.

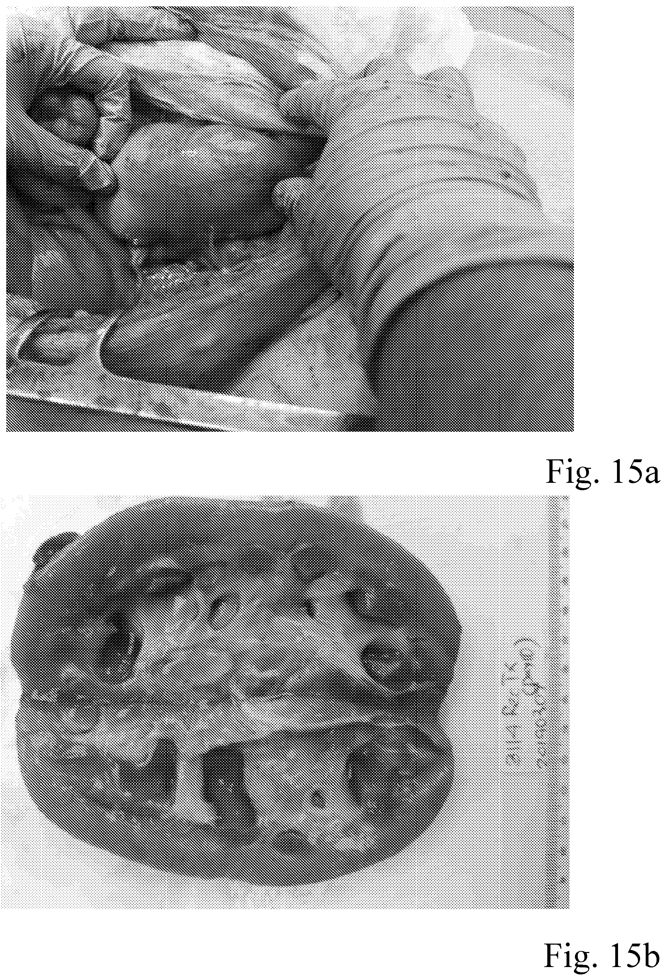

Fig. 15a shows a normal looking kidney transplant 10 days after transplantation. No macroscopic signs of rejection.

Fig. 15b shows the cut surface of the transplanted kidney in Fig. 15a, showing normal macroscopic architecture.

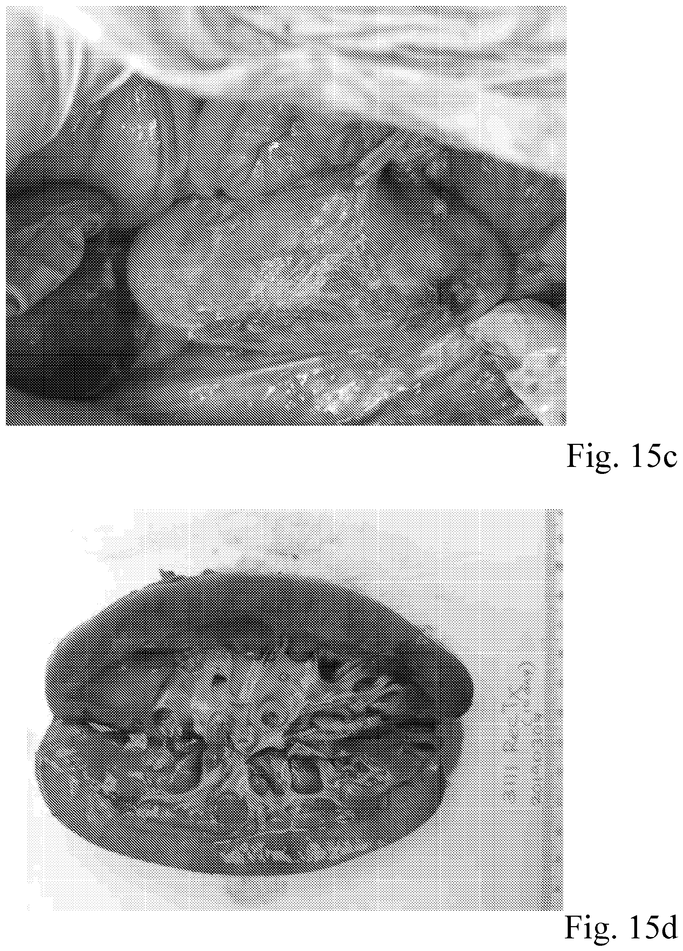

Fig. 15c shows the surface of the second kidney surviving 10 days, showing area of dark spots, indicating affected microcirculation

Fig. 15d shows the cut surface of the transplanted kidney in Fig. 15c, showing a dark area with affected circulation in the lower pole. The data indicates that the treatment can recover both function and structure, although there may remain a risk for local damage of the microcirculation

### Example 11 (not according to the invention)

In a further experiment comprising 19 pigs, cytokine levels were measured in three groups. In Group A (n=5), comprised of live donor kidneys perfused with a 72g/L albumin solution (Table I) without any adsorber of cytokines, samples were taken at start of perfusion, at 3 hours and at the end of 37 °C. In Group B (n=5), comprised of live donor kidneys perfused with a 57 g/L albumin solution (Table H) without any adsorber of cytokines, samples were taken at start of perfusion, at 3 hours and at the end of 37°C. In Group C (n=9), comprised of DCD kidneys perfused with 72 g/L albumin solution for 90 minutes and 57 g/L albumin for 90 minutes before RBC and perfusion at 37°C, all during which a cytokine adsorber (Cytosorb, Cytosorbents) was used. An ELISA kit (Quantikine ELISA kit, R&D Biosystems) was used for the analyzes. Levels below detection levels were set to 0 and mean levels for measured levels within each group was then calculated.

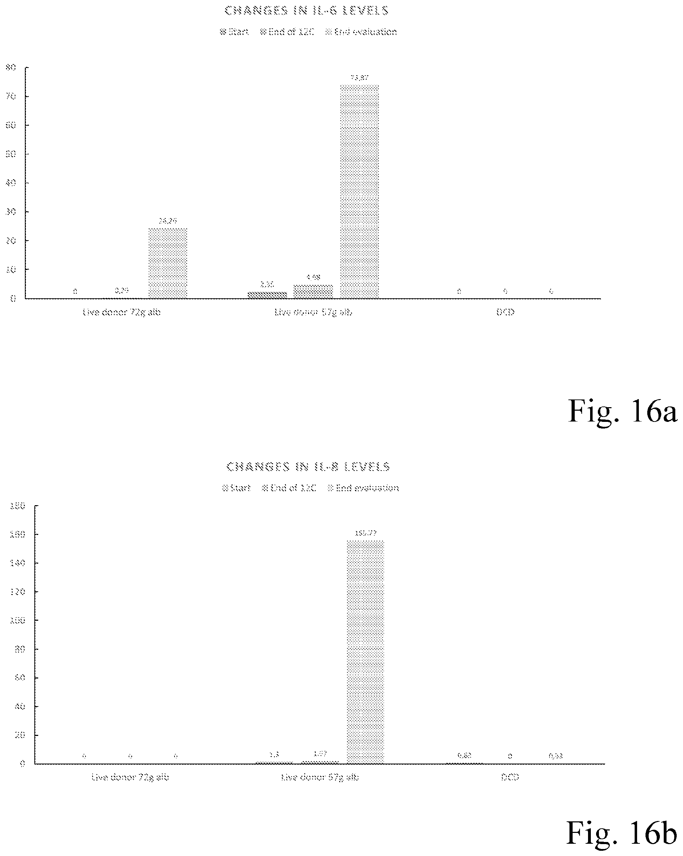

Fig. 16a is a diagram showing changes in IL-6 levels mainly from the RBCs. The adsorber (Group C) effectively removed all signs of IL-6.

Fig. 16b is a diagram showing changes in IL-8 levels, also mainly from RBCs and less from the 57g/L than the 72 g/L albumin solution. The adsorber removed the IL-8 (Group C).

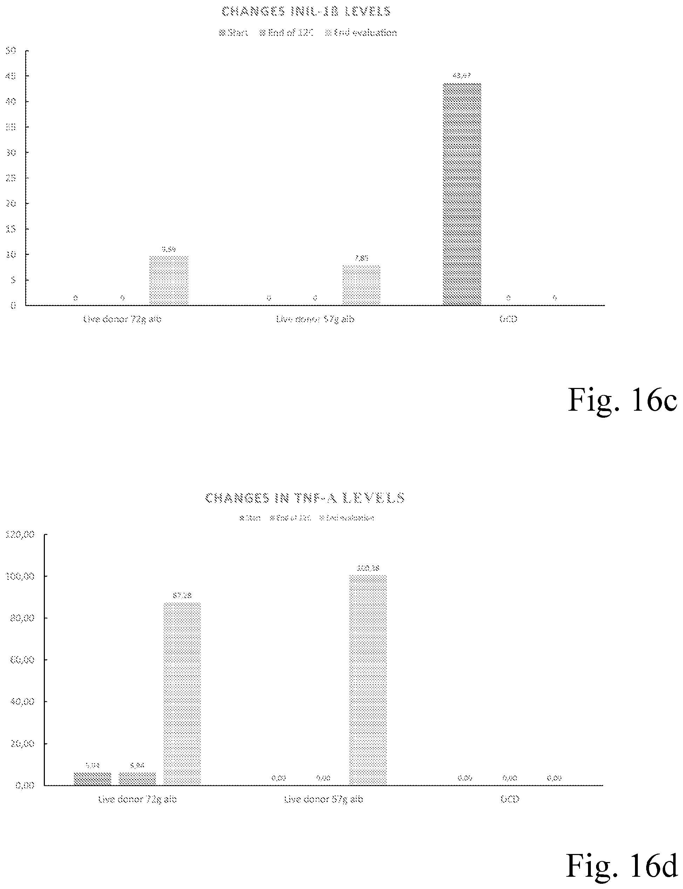

Fig. 16c is a diagram showing changes in IL-1β levels, also mainly from RBCs. The adsorber again removed all signs of cytokines contributed from either the kidneys itself or the RBCs added.

Fig. 16d is a diagram showing changes in TNF-α levels, also mainly from RBCs. The adsorber again removed all signs of cytokines contributed from either the kidneys itself or the RBCs added. Data not shown include analyzes of IL-10 levels, where it was not possible to detect any levels in any of the groups.

### Example 12 (not according to the invention)

In another experiment, pigs were declared death according the above protocol, using topical cooling with ice slush after 2 hours and start of kidney retrieval after 4 hours.

The kidneys were retrieved with a WIT of 4.5 to 5 hours.

At the backtable, the kidneys were injected with 10U lys-plasminogen and 2mg tPA each in 15 ml solution.

| **TABLE** I | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ • 2H2O | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-Inositol | | 0.002 | 0.0111 |
| NaHCO3 | | 4.15 | 49.40 | | Niacinamide | | 0.001 | 0.00819 |
| Sodium Gluconate | | 21.80 | 100.00 | | D-Panthothenic Acid • ½Ca | | 0.001 | 0.00210 |
| **Amino acids** | | | | | Pyridoxinhydrochloride | | 0.001 | 0.00486 |
| L-Glutamine | | 0.292 | 2.00 | | Riboflavin | | 0.0001 | 0.000266 |
| L-Arginine • HCl | | 0.105 | 0.603 | | Thiamine • HCl | | 0.001 | 0.00296 |
| **Hormones** | | | | | **Other** | | | |
| T3 | | 0.000000001953 | 0.000000030 | | Adenine | | 0.68 | 5.00 |
| T4 | | 0.00000000233 | 0.000000030 | | Dextrose | | 1.00 | 5.55 |
| Insulin Novorapid | | 5U | | | D-Ribose | | 0.75 | 5.00 |
| Progesterone | | 0.00315 | 0.001002 | | Albumin | | 72 | |
| Estrogen | | 0.00001 | 0.00004 | | Tienam | | 0.050 | |
| | | | | | Sterile water | | | |

The kidneys were arranged in the ex-vivo device and perfused. The perfusion solution comprised the ingredients seen in Table J with albumin at a concentration of 57 g albumin /L and the pressure was increased from 20 mmHg to 70 mmHg, 5 mmHg each 5 minutes. 600U of ATIII was used during the perfusion phase (20°C) along with 2mg abciximab (platelet inhibitor).

| **TABLE J** | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ • 2H₂O | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-Inositol | | 0.002 | 0.0111 |
| NaHCO₃ | | 4.15 | 49.40 | | Niacinamide | | 0.001 | 0.00819 |
| Sodium Gluconate | | 17.451 | 80.00 | | D-Panthothenic Acid • ½Ca | | 0.001 | 0.00210 |
| Potassium Gluconate | | 3.982 | 17.00 | | Pyridoxinhydrochloride | | 0.001 | 0.00486 |
| **Amino acids** | | | | | Riboflavin | | 0.0001 | 0.000266 |
| L-Glutamine | | 0.292 | 2.00 | | Thiamine • HCl | | 0.001 | 0.00296 |
| L-Arginine • HCl | | 0.105 | 0.603 | | **Other** | | | |
| **Hormones** | | | | | Adenine | | 0.68 | 5.00 |
| Insulin Novorapid | | 5 U | | | Dextrose | | 1.00 | 5.55 |
| | | | | | D-Ribose | | 0.75 | 5.00 |
| | | | | | Albumin | | 57g/L | |
| | | | | | Tienam | | 0.050 | |
| | | | | | Sterile water | | | |

After draining and rinsing twice with 250ml of the solution according to Table J with 57g albumin/L, perfusion was continued with the solution according to Table J with 57g albumin/L at 15°C for 2 hours.

Then, the pressure was raised to 30 mmHg and temperature to 28°C followed by perfusion during 30 minutes, whereupon RBCs were added. The RBCs had been pretreated with 800U of ATIII along with 2mg abciximab and perfused trough a leucocyte filter before being mixed with the solution. Kidneys cleared up completely with the treatment without patches or affected circulation.

The kidneys were transplanted and two pigs were followed for 7 days before being sacrificed. One kidney had an infection. Both pigs had elevated creatinine at day 7 with creatinine in blood 1115 µmol/L, 1305 µmol/L, in urine 1790 µmol/L, 4530 µmol/L - which may be interpreted as signs of DGF but improved kidney function concentrating urine.

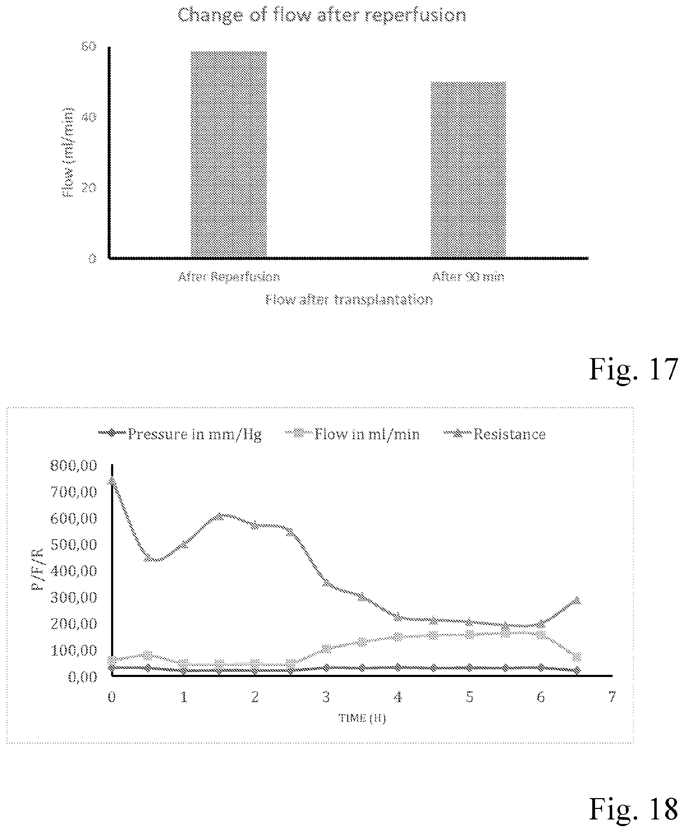

Fig. 17 is a diagram showing the flows after perfusion with the solution having an osmolality of around 300mosm and the addition of ATIII and a platelet inhibitor. The diagram shows higher initial flows at reperfusion then seen in previous experiments.

### Example 13(not according to the invention)

In another experiment, a similar protocol as in Example 12 was used.

At the backtable, kidneys were injected with 15U lys-plasminogen and 3mg tPA each in 15ml solution.

The kidneys were arranged in the ex-vivo device and perfused with a solution comprising the ingredients seen in Table J with albumin at a concentration of 57g albumin/L. 600U of ATIII was used during the perfusion phase (20°C) along with 3mg abciximab. The pressure was increased from 20 mmHg to 70 mmHg, 5 mmHg each 5 minutes.

After draining and rinsing twice with 250ml of the solution according to Table J with 57g albumin/L, perfusion was continued with the solution according to Table J with 57g albumin/L at 15°C for 2 hours. An additional dose of 600U of ATIII and 3mg of abciximab was added during this phase.

Then, the pressure was raised to 30 mmHg and temperature to 28°C followed by perfusion during 30 minutes, whereupon RBCs were added. The RBCs had been pretreated with 800U of ATIII along with 3mg abciximab and perfused trough a leucocyte filter before being mixed with the solution.

After perfusion during 2,5 hours, the flow at a pressure of 30 mmHg reduced from 147 ml/min to 138 ml/min and resistance increased. Another 800U of ATIII and 3mg of abciximab was added to the solution. The flow and resistance remained stagnant for 30 min and then flow increased and resistance reduced.

### Example 14(not according to the invention)

In another experiment including 6 pigs, the following protocol was used.

Firstly, the right kidney of a living donor was removed and discarded, while the left kidney of the donor was left working.

Secondly, the left kidney of a recipient was retrieved and directly transplanted to the living donor where the right kidney of the donor had been removed.

The recipient's abdomen was closed and the recipient was left sleeping waiting for later transplantation and with the right kidney of the recipient still working.

In the living donor, the recipients left kidney transplanted to the donor was reperfused with the blood of the donor and observed until it produced urine. The abdomen of the donor was closed.

Then, cardiac arrest of the donor was produced like in previous examples.

The recipients left kidney, which had been transplanted to the donor, was retrieved after a WIT of 4.5 to 5 hours

On the back table, the kidneys were injected with 20 U Lys-Plasminogen and 600 U ATIII while keeping both the arteries and veins clamped. After 15 minutes, 4mg of tPa was injected together with another 600 U ATIII. After 15 minutes, the kidneys were connected to the ex-vivo perfusion machine.

| **TABLE K** | | | | | | | | |
|---|---|---|---|---|---|---|---|---|
| **COMPONENT** | | **g/L** | **mM** | | | | **g/L** | **mM** |
| **Inorganic Salts** | | | | | **Vitamins** | | | |
| CaCl₂ • 2H20 | | 0.6732 | 4.95 | | Choline Chloride | | 0.001 | 0.00716 |
| Magnesium Gluconate (anhydrous) | | 1.13 | 5.00 | | Folic Acid | | 0.001 | 0.00227 |
| Potassium Phosphate (monobasic) | | 0.68 | 5.00 | | myo-Inositol | | 0.002 | 0.0111 |
| NaHCO₃ | | 4.15 | 49.40 | | Niacinamide | | 0.001 | 0.00819 |
| Sodium Gluconate | | 17.451 | 80.00 | | D-Panthothenic Acid • ½Ca | | 0.001 | 0.00210 |
| Potassium Gluconate | | 3.982 | 17.00 | | Pyridoxinhydrochloride | | 0.001 | 0.00486 |
| **Amino acids** | | | | | Riboflavin | | 0.0001 | 0.000266 |
| L-Glutamine | | 0.292 | 2.00 | | Thiamine • HCl | | 0.001 | 0.00296 |
| L-Arginine • HCl | | 0.105 | 0.603 | | **Other** | | | |
| **Hormones** | | | | | Adenine | | 0.68 | 5.00 |
| Insulin Novorapid | | 40 U | | | Dextrose | | 1.00 | 5.55 |
| | | | | | D-Ribose | | 0.75 | 5.00 |
| | | | | | Albumin | | 57g/L | |
| | | | | | Tienam | | 0.050 | |
| | | | | | Sterile water | | | |

In the ex-vivo perfusion machine, the kidneys were perfused with a solution according to Table K with 57 g albumin/L. After perfusion during 5 minutes at a pressure of 70 mmHg, the perfusion pressure was lowered to 30 mmHg and the kidneys were perfused for 30 minutes. Then, the pressure was lowered to 20 mmHg and the temperature to 15°C and the kidneys were perfused for 2 hours.

In parallel, washed RBC was circulated through an external leukocyte filter for 1 hour at room temperature. 1000 U ATIII, 3mg abciximab and 4mg argatroban (direct antithrombin inhibitor) was added to the circulating RBC.

A Cytosorb^{®} filter adsorbing cytokines and an Alteco^{®}-filter adsorbing endotoxins were rinsed with NaCl and the solution according to Table K and then attached to the perfusion machine.

The temperature of the perfusion solution was increased to 28°C and the pressure was increased to 30 mmHg for 30 minutes. The RBC mentioned above was added to the solution and the filters were connected, for example as shown in Fig. 5. After stabilizing the environment at 28°C, the temperature was raised to 32°C. The kidneys were perfused at this temperature for 3 hours.

Then, 1000U ATIII, 3mg abciximab and 8mg argatroban was added to the solution. After 1.5-hour perfusion at 32°C, 1.5mg abciximab, 4mg argatroban, and 1000U ATIII was added to the solution. The temperature was then reduced to 15°C and the pressure to 20mmHg and kidneys were perfused for 30 minutes.

The kidneys were then taken out and the recipient kidney was transplanted back to the recipient and the remaining recipient native kidney was removed. Flows and resistance can be seen in Fig. 18.

### Example 15(not according to the invention)

In another experiment including 9 pigs, the same protocol as in Example 14 was used.

The recipients left kidney, which had been transplanted to the donor, was retrieved after a WIT of 4.5 to 5 hours.

On the back table, the kidneys were injected with 30 U Lys-Plasminogen and 600 U ATIII while keeping both the arteries and veins clamped. After 15 minutes, 6mg tPa was injected together with another 600 U ATIII. After another15 min, the kidneys were connected to the perfusion machine.

In the ex-vivo perfusion machine, the kidneys were perfused with a solution according to Table K with 57 g albumin/L. After perfusion during 5 minutes at a pressure of 75 mmHg, the perfusion pressure was lowered to 25 mmHg and the kidneys were perfused for 30 minutes. The pressure was lowered to 20 mmHg and the temperature to 15°C and the kidneys were perfused for 2 hours.

In parallel, washed RBC was circulated through an external leukocyte filter for 1 hour at room temperature. 1000 U ATIII, 3mg abciximab and 4mg argatroban was added to the circulating RBC.

A Cytosorb^{®} filter adsorbing cytokines and an Alteco^{®}-filter adsorbing endotoxins were rinsed with NaCl and the solution according to Table K and then attached to the perfusion machine.

The temperature of the perfusion solution was increased to 28°C and the pressure was increased to 30 mmHg for 30 minutes. The RBC mentioned above was added to the solution and the filters were connected. After stabilizing the environment at 28°C, the temperature was raised to 32°C. The kidneys were perfused at this temperature for 3 hours.

Then, 1000U ATIII, 3mg abciximab and 8mg argatroban was added to the kidneys. After 1.5-hour perfusion at 32°C, 1.5mg abciximab, 4mg argatroban, and 1000U ATIII was added to the kidneys.

### Example 16 according to the invention)

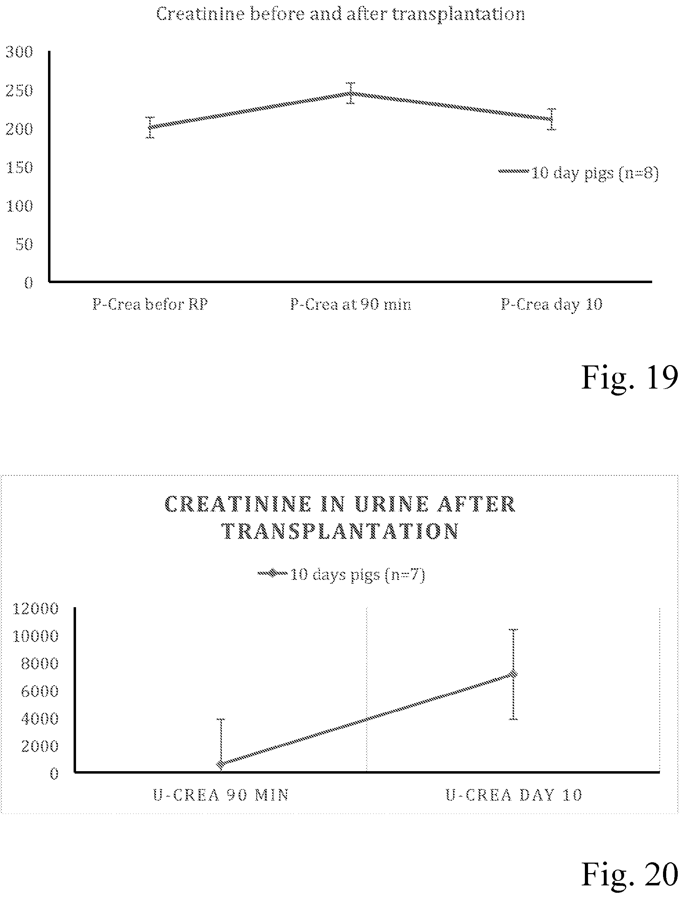

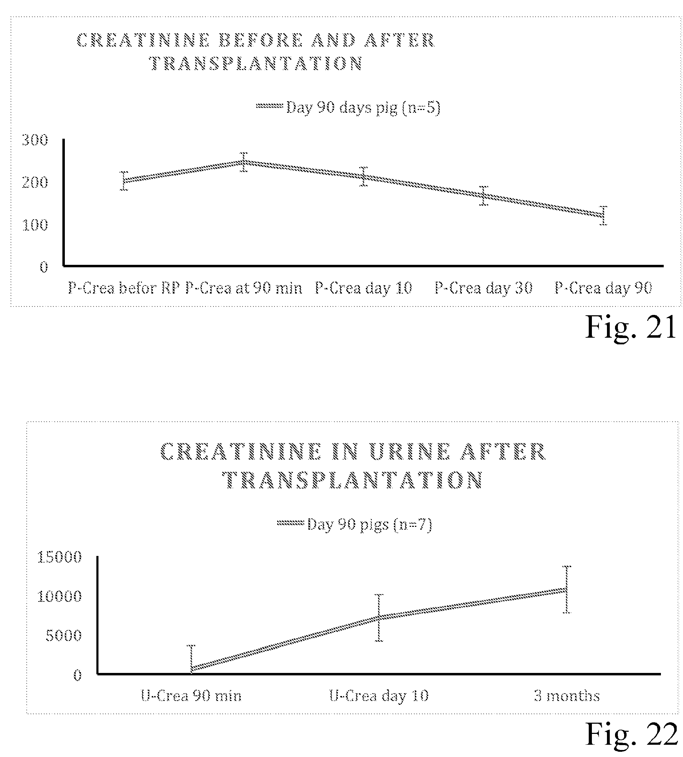

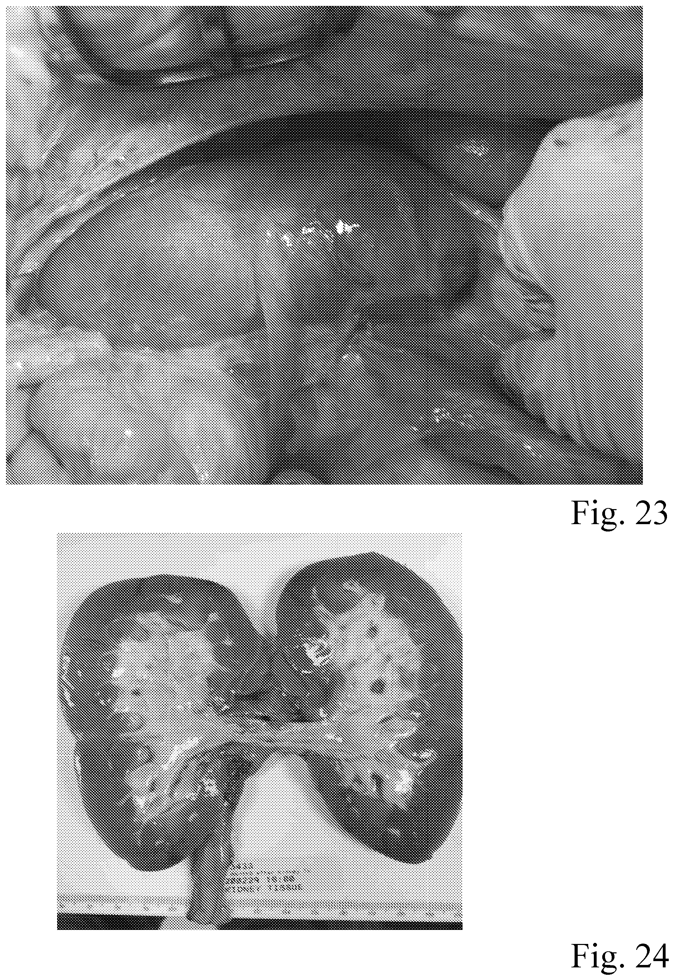

In another experiment including 8 pigs, similar to experiment 15, pigs were treated according to the same protocol as on the previous examples 14 and 15. After transplantation, the pigs were then allowed to recover from anesthesia and followed for up to thee months. The creatinine in plasma at 10 days and three months as well as creatinine in urine at the same time points were followed with data as shown in Figs. 19 to 22. Creatinine was normalized within the first week and kept normal during three months of survival without need of dialysis. Fig 23 shows a typical kidney, explored three months after reconditioning and transplantation, well perfused without signs of fibrosis or atrophies. In fig 24 the kidney has been removed and cut along the curvature, demonstrating a normal renal parenchyma.

### Discussion

In Example 1 the basic principle of reconditioning kidneys from a donor subject to warm ischemia time (WIT) beyond 4 hours after circulatory death (DCD) was investigated, using a solution comprised of a minimum essential medium (MEM) and with albumin as a hyperoncotic agent. Ex-vivo normothermic perfusion resulted in significantly better blood flow and urinary production than LifePort (LP) or cold storage (CS) preserved controls.

In Example 2, extensive flushing of the retrieved DCD kidneys after applying Heparin, apyrase - a purinergic inhibitor removing ATP from tissue - and tPA (alteplas) injected both in the artery and in the perfusion solution, improved the vascular resistance and blood flow marginally and did not completely clear the kidneys, using a similar composed perfusion solution. Apyrase may be delivered to the kidney after the microcirculation has been cleared of fibrin clots.

In Example 3, Lidocaine was added, which improved the blood flow at 90 minutes, suggesting stabilized membrane function possibly through inhibition of the Na⁺ K⁺ pump.

In Example 4, it was further noted that extended time of perfusion using RBCs was possible at 32°C, some kidneys were observed for 8 hours after transplantation into a recipient pig, and in the next Example 5, the perfusion time was extended to 11 hours with maintained function in the transplanted kidney.

In Example 6 an agent with higher colloid oncotic pressure - albumin 80g/L - was found to produce kidneys with good renal flows above 115 ml/min with a WIT of 4 to 6 hours. Recipients were followed for 8 hours after transplantation.

In Example 7 topical cooling was changed from cold Ringer solution to ice 2 hours after death. This brought down core body temperature to 20°C, compared to 25°C to 29°C using cold Ringer. Blood flow was significantly improved both at 4 and 8 hours after transplantation.

Pigs receiving no topical cooling, see Example 8, and receiving just back table perfusion did not show good flows at reperfusion (14.15 ml/min) or at 90 minutes (36.8 ml/min).

In Examples 9 and 10, the temperature and the colloid oncotic pressure were varied as well as introducing ice slush instead of regular ice. Now body temperature down to 10 to 12°C could be reached before harvesting. By treating the kidneys with lys-plasminogen in combination with tPA, kidneys were much better cleared and the vascular resistance greatly improved. ATIII was given to prevent re-thrombosis of vessels subject to fibrinolysis treatment. We used alteplas, but any fibrinolytic agent, like streptokinase, urokinase, reteplase and tenecteplase could be used. This modification cleared the kidneys better than seen in previous examples. Several of these kidneys survived 10 days with functioning kidneys after nephrectomy of the native kidneys had been performed at the time of transplantation, proving that kidneys from DCD donors, 4 hours after death can be used. It was found that the RBC treatment during the evaluation period may contribute to release of cytokines, such as IL-6, IL-8, IL-1β and TNF-α, all participating in inflammatory events and ischemia reperfusion. By using a specific adsorber (Cytosorb), these cytokines could be removed completely, see Example 11.

In the following Examples 12 and 13 we noted that a platelet inhibitor, such as abciximab, added to the preservation solution and to the RBCs before they were mixed with the perfusion solution, produced very good flows. Furthermore, signs of increased vascular resistance during extended perfusion with RBCs could be improved by adding ATIII and abciximab to the solution, indicating that it is desired to prevent re-thrombosis by both the coagulation system and the platelet adhesion after the fibrinolysis have been ended. The dose of ATIII was increased in these Examples compared to previous Examples.

In Examples 14 and 15, results were further improved by addition of a direct thrombin inhibitor, as argatroban, avoiding the risk of reduced flow and increased vascular resistance during the RBC phase.

In example 16, we successfully transplanted kidneys reconditioned according to Examples 14 and 15 and followed them up to 3 months, proving that the kidneys reconditioned also were functional in a relevant clinical setting. The novel transplant model used in Examples 14, 15 and 16, means that allorejection mechanisms are eliminated due to the fact that the kidney transplanted initially was moved from the recipient to the donor before cardiac death was induced. The pigs survived without need of dialysis, despite the fact that the reconditioned kidney was the sole renal function in the recipient pig.

In the claims, the term "comprises/comprising" does not exclude the presence of other elements or steps. Furthermore, although individually listed, a plurality of means, elements or method steps may be implemented by e.g. a single unit. Additionally, although individual features may be included in different claims or embodiments, these may possibly advantageously be combined, and the inclusion in different claims does not imply that a combination of features is not feasible and/or advantageous. In addition, singular references do not exclude a plurality. The terms "a", "an", "first", "second" etc. do not preclude a plurality. Reference signs in the claims are provided merely as a clarifying example and shall not be construed as limiting the scope of the claims in any way.

Although the present invention has been described above with reference to specific embodiment and experiments, it is not intended to be limited to the specific form set forth herein. Rather, the invention is limited only by the accompanying claims and other embodiments than those specified above are equally possible within the scope of these appended claims.

## Claims

1. A method of recovering a kidney harvested from a donor, comprising:
retrieving the kidney from the donor, at least two hours after the donor had circulation arrest;
providing lys-plasminogen to the kidney after harvesting, wherein the lys-plasminogen is comprised in a first hyperoncotic fluid;
providing a tissue plasminogen activator (tPA) simultaneously or after providing lys-plasminogen, wherein the tissue plasminogen activator is comprised in a second hyperoncotic fluid;
in a first restoration step, circirculating through the kidney a third hyperoncotic fluid comprising albumin and electrolytes at a low temperature of between 5°C and 25°C;
in a second restoration step, circulating through the kidney a fourth hyperoncotic fluid comprising red blood cells (RBC) at a temperature of between 30°C to 37°C;
evaluating the kidney by conventional criteria.

2. The method according to claim 1, wherein said first restoration step comprises:
circulating said third hyperoncotic fluid through the kidney, wherein said third hyperoncotic fluid comprises albumin at a concentration of between 50 g/L and 120 g/L, whereby a circulation pressure is increased, for example from about 20 mmHg to 90 mmHg, during 30 to 75 minutes, for example in steps of 5 mmHg per 5 minutes.

3. The method according to claim 1 or 2, wherein said second restoration step comprises:
circulating said fourth hyperoncotic fluid through the kidney, wherein said fourth hyperoncotic fluid comprises albumin at a concentration of between 50 g/L and 120 g/L, whereby a circulation pressure is increased, for example from about 20 mmHg to 90 mmHg, during 30 to 75 minutes, for example in steps of 5 mmHg per 5 minutes.

4. The method according to any one of the previous claims, further comprising:
storing the kidney at a low temperature of between 4°C and 16°C while circulating a preservation fluid through the kidney at a pressure below 30 mmHg, during a time of between one hour and 7 hours.

5. The method according to claim 4, whereby the storing step is performed after the second restoration step or between the first restoration step and the second restoration step..

6. The method according to any one of the previous claims, wherein the first and second hyperoncotic fluid comprises albumin in a concentration of between 50 g/L and 120 *g*/*L.*

7. The method according to any one of the previous claims, wherein at least one of the first, second, third and fourth hyperoncotic fluids further comprises at least one of: a coagulation inhibitor, such as antithrombin III; a direct thrombin inhibitors, such as argatroban; protein C; protein S; and a platelet inhibitor such as abciximab.

8. The method according to any one of the previous claims, wherein the at least one of the third and fourth hyperoncotic fluids is circulated through a leucocyte-filter.

9. The method according to any one of the previous claims, wherein at least one of the third and fourth hyperoncotic fluids is contacted by a cytokine adsorber, such as Cytosorbent, for adsorption of cytokines.

10. The method according to any one of the previous claims, wherein at least one of the third and fourth hyperoncotic fluids is contacted by an endotoxin adsorber, such as LPS Adsorber, for adsorption of endotoxins.

11. The method according to any one of the previous claims, further comprising:
retrieval of the kidney from the donor after the donor had circulation arrest for at least three hours, wherein the at least three hours includes no more than two hours of topical cooling by cold saline, ice or ice slush installed in the abdomen of the donor.

12. The method of recovering a kidney harvested from a donor according to claim 1, comprising:
obtaining the kidney from the donor at least four hours after the donor had circulation arrest;
providing lys-plasminogen to the kidney after harvesting, wherein the lys-plasminogen is comprised in a first hyperoncotic fluid comprising albumin at a concentration of between 50 g/L and 70 g/L and a coagulation inhibitor;
providing a tissue plasminogen activator (tPA) to the kidney simultaneously or after providing lys-plasminogen, wherein the tissue plasminogen activator is comprised in a second hyperoncotic fluid comprising albumin at a concentration of between 50 g/L and 70 g/L and a coagulation inhibitor;
in a first restoration step, circulating through the kidney a third hyperoncotic fluid comprising albumin at a concentration of between 50 g/L and 120 g/L and electrolytes and a coagulation inhibitorat a low temperature of between 5°C and 25°C while the pressure is increased from 20 mmHg to between 70 mmHg and 90 mmHg;
in a second restoration step, circulating through the kidney a fourth hyperoncotic fluid comprising red blood cells (RBC) albumin at a concentration of between 50 g/L and 120 g/L and electrolytes and a coagulation inhibitor at a temperature of between 30°C to 37°C;
evaluating the kidney by conventional criteria.

## Patentansprüche

1. Ein Verfahren zur Wiederherstellung einer Niere, die von einer Spender entnommen wurde, umfassend:
Entnahme der Niere vom Spender mindestens zwei Stunden nach einem Kreislaufstillstand der Spender;
Zuführung von Lys-Plasminogen zur Niere nach der Entnahme, wobei das Lys-Plasminogen in einer ersten hyperonkotischen Flüssigkeit enthalten ist;
Zuführung eines Gewebeplasminogenaktivators (tPA) gleichzeitig oder nach der Lys-Plasminogenzufuhr, wobei der Gewebeplasminogenaktivator in einer zweiten hyperonkotischen Flüssigkeit enthalten ist;
in einem ersten Restaurierungsschritt Zirkulieren einer dritten hyperonkotischen Flüssigkeit, die Albumin und Elektrolyte enthält, bei einer niedrigen Temperatur zwischen 5°C und 25°C durch die Niere;
in einem zweiten Restaurierungsschritt Zirkulieren einer vierten hyperonkotischen Flüssigkeit, die sauerstoffreiche rote Blutkörperchen (RBC) enthält, bei einer Temperatur zwischen 30 °C und 37 °C durch die Niere;
Auswerten der Niere nach herkömmlichen Kriterien.

2. Das Verfahren gemäß Anspruch 1, wobei der erste Restaurierungsschritt umfasst:
Zirkulieren der dritten hyperonkotischen Flüssigkeit durch die Niere, wobei die dritte hyperonkotische Flüssigkeit Albumin in einer Konzentration zwischen 50 g/l und 120 g/l enthält, wodurch ein Kreislaufdruck, beispielsweise von etwa 20 mmHg auf 90 mmHg, während 30 bis 75 Minuten erhöht wird, beispielsweise in Schritten von 5 mmHg pro 5 Minuten.

3. Das Verfahren gemäß Anspruch 1 oder 2, wobei der zweite Restaurierungsschritt umfasst:
Zirkulieren der vierten hyperonkotischen Flüssigkeit durch die Niere, wobei die vierte hyperonkotische Flüssigkeit Albumin in einer Konzentration zwischen 50 g/l und 120 g/l enthält, wodurch ein Kreislaufdruck, beispielsweise von etwa 20 mmHg auf 90 mmHg, während 30 bis 75 Minuten erhöht wird, beispielsweise in Schritten von 5 mmHg pro 5 Minuten.

4. Das Verfahren gemäß einem der vorhergehenden Ansprüche, das ferner umfasst:
Lagerung der Niere bei einer niedrigen Temperatur zwischen 4 °C und 16 °C, während eine Konservierungsflüssigkeit bei einem Druck unter 30 mmHg über einen Zeitraum zwischen einer Stunde und sieben Stunden durch die Niere zirkuliert.

5. Das Verfahren gemäß Anspruch 4, wobei der Lagerungschritt nach dem zweiten Restaurierungsschritt oder zwischen dem ersten Restaurierungsschritt und dem zweiten Restaurierungsschritt durchgeführt wird.

6. Das Verfahren gemäß einem der vorhergehenden Ansprüche, wobei die erste und zweite hyperonkotische Flüssigkeit Albumin in einer Konzentration zwischen 50 g/l und 120 g/l umfasst.

7. Das Verfahren gemäß einem der vorhergehenden Ansprüche, wobei mindestens eine der ersten, zweiten, dritten und vierten hyperonkotischen Flüssigkeiten außerdem mindestens eines der folgenden umfasst: einen Gerinnungshemmer, wie Antithrombin III; einen direkten Thrombinhemmer, wie Argatroban; Protein C; Protein S; und einen Thrombozytenhemmer, wie Abciximab.

8. Das Verfahren gemäß einem der vorhergehenden Ansprüche, wobei die dritte und/oder vierte hyperonkotische Flüssigkeit durch einen Leukozytenfilter zirkuliert wird.

9. Das Verfahren gemäß einem der vorhergehenden Ansprüche, wobei mindestens eine der dritten und vierten hyperonkotischen Flüssigkeiten zur Adsorption von Zytokinen mit einem Zytokinadsorber, wie beispielsweise Cytosorbent, in Kontakt gebracht wird.

10. Das Verfahren gemäß einem der vorhergehenden Ansprüche, wobei mindestens eine der dritten und vierten hyperonkotischen Flüssigkeiten zur Adsorption von Endotoxinen mit einem Endotoxinadsorber, wie LPS-Adsorber, in Kontakt gebracht wird.

11. Das Verfahren gemäß einem der vorhergehenden Ansprüche, das ferner umfasst:
Entnahme der Niere aus dem Spender, mindestens drei Stunden nach einem Kreislaufstillstand der Spender, wobei die mindestens drei Stunden höchstens zwei Stunden lokale Kühlung durch kalte Kochsalzlösung, Eis oder Eisbrei im Bauchraum des Spenders umfassten.

12. Das Verfahren zur Wiederherstellung einer Niere, die von einem Spender entnommen wurde gemäß Anspruch 1, umfassend:
Entnahme der Niere vom Spender mindestens vier Stunden nach einem Kreislaufstillstand der Spender;
Zuführung von Lys-Plasminogen zur Niere nach der Entnahme, wobei das Lys-Plasminogen in einer ersten hyperonkotischen Flüssigkeit enthalten ist, die Albumin in einer Konzentration zwischen 50 g/l und 70 g/l und einen Gerinnungshemmer enthält;
Zuführung eines Gewebeplasminogenaktivators (tPA) zur Niere gleichzeitig mit oder nach der Zuführung von Lys-Plasminogen, wobei der Gewebeplasminogenaktivator in einer zweiten hyperonkotischen Flüssigkeit enthalten ist, die Albumin in einer Konzentration zwischen 50 g/l und 70 g/l und einen Gerinnungshemmer enthält;
in einem ersten Restaurierungsschritt Zirkulieren einer dritten hyperonkotischen Flüssigkeit, die Albumin in einer Konzentration zwischen 50 g/l und 120 g/l sowie Elektrolyte und einen Gerinnungshemmer enthält, bei einer niedrigen Temperatur zwischen 5 °C und 25 °C durch die Niere, während der Druck von 20 mmHg auf zwischen 70 mmHg und 90 mmHg erhöht wird;
in einem zweiten Restaurierungsschritt Zirkulieren einer vierten hyperonkotischen Flüssigkeit, die rote Blutkörperchen (RBC), Albumin in einer Konzentration zwischen 50 g/l und 120 g/l sowie Elektrolyte und einen Gerinnungshemmer enthält, bei einer Temperatur zwischen 30 °C und 37 °C durch die Niere;
Auswerten der Niere nach herkömmlichen Kriterien.

## Revendications

1. Procédé de récupération d'un rein récolte chez un donneur, comprenant:
obtenir le rein du donneur au moins deux heures après l'arrêt circulatoire du donneur;
fournir du lys-plasminogène au rein après la récolte, le lys-plasminogène étant compris dans un premier fluide hyperoncotique;
fournir un activateur tissulaire du plasminogène (tPA) simultanément ou après avoir fourni du lys-plasminogène, l'activateur tissulaire du plasminogène étant compris dans un second fluide hyperoncotique;
dans une première étape de restauration, faire circuler dans le rein un troisième fluide hyperoncotique comprenant de l'albumine et des électrolytes à basse température comprise entre 5°C et 25°C;
dans une deuxième étape de restauration, faire circuler dans le rein un quatrième fluide hyperoncotique comprenant des globules rouges (GR) à une température comprise entre 30°C et 37°C;
évaluer le rein selon des critères conventionnels.

2. Procédé selon la revendication 1, dans lequel ladite première étape de restauration comprend:
faire circuler ledit fluide hyperoncotique dans le rein, ledit troisième fluide hyperoncotique comprenant de l'albumine à une concentration comprise entre 50 g/L et 120 g/L, la pression de circulation étant augmentée, par exemple d'environ 20 mmHg à 90 mmHg, pendant 30 à 75 minutes, par exemple par paliers de 5 mmHg toutes les 5 minutes.

3. Procédé selon la revendication 1 ou 2, dans lequel ladite deuxième étape de restauration comprend:
la circulation dudit quatrième fluide hyperoncotique dans le rein, ledit quatrième fluide hyperoncotique comprenant de l'albumine à une concentration comprise entre 50 g/L et 120 g/L, la pression de circulation étant augmentée, par exemple d'environ 20 mmHg à 90 mmHg, pendant 30 à 75 minutes, par exemple par paliers de 5 mmHg toutes les 5 minutes.

4. Procédé selon l'une quelconque des revendications précédentes, comprenant en outre:
stockage le rein à une basse température comprise entre 4°C et 16°C tout en faisant circuler un fluide de conservation dans le rein à une pression inférieure à 30 mmHg, pendant une durée comprise entre une heure et 7 heures.

5. Procédé selon la revendication 4, dans lequel l'étape de stockage est effectuée après la deuxième étape de restauration ou entre la première étape de restauration et la deuxième étape de restauration.

6. Procédé selon l'une quelconque des revendications précédentes, dans lequel le premier et le second fluide hyperoncotique comprennent de l'albumine dans une concentration comprise entre 50 g/L et 120 g/L.

7. Procédé selon l'une quelconque des revendications précédentes, dans lequel au moins l'un des premier, deuxième, troisième et quatrième fluides hyperoncotiques comprend en outre au moins l'un des éléments suivants: un inhibiteur de la coagulation, tel que l'antithrombine III; un inhibiteur direct de la thrombine, tel que l'argatroban; la protéine C; la protéine S; et un inhibiteur plaquettaire, tel que l'abciximab.

8. Procédé selon l'une quelconque des revendications précédentes, dans lequel au moins l'un des troisième et quatrième fluides hyperoncotiques est mis en circulation à travers un filtre à leucocytes.

9. Procédé selon l'une quelconque des revendications précédentes, dans lequel au moins l'un des troisième et quatrième fluides hyperoncotiques est mis en contact avec un adsorbeur de cytokines, tel que Cytosorbent, pour l'adsorption de cytokines.

10. Procédé selon l'une quelconque des revendications précédentes, dans lequel au moins l'un des troisième et quatrième fluides hyperoncotiques est mis en contact avec un adsorbeur d'endotoxines, tel que adsorbeur LPS, pour l'adsorption d'endotoxines.

11. Procédé selon l'une quelconque des revendications précédentes, comprenant en outre:
recueillir du rein du donneur après un arrêt circulatoire du donneur d'au moins trois heures, ces trois heures au moins comprenant au maximum deux heures de refroidissement topique par une solution saline froide, de la glace ou de la glace pilée appliquée dans l'abdomen du donneur.

12. Procédé de récupération d'un rein récolte chez un donneur selon la revendication 1, comprenant:
obtenir le rein du donneur au moins quatre heures après après l'arrêt circulatoire du donneur;
fournir du lys-plasminogène au rein après la récolte, le lys-plasminogène étant compris dans un premier fluide hyperoncotique comprenant de l'albumine à une concentration comprise entre 50 g/L et 70 g/L et un inhibiteur de la coagulation;
fournir un activateur tissulaire du plasminogène (tPA) au rein simultanément ou après avoir fourni du lys-plasminogène, l'activateur tissulaire du plasminogène étant compris dans un second fluide hyperoncotique comprenant de l'albumine à une concentration comprise entre 50 g/L et 70 g/L et un inhibiteur de la coagulation;
dans une première étape de restauration, faire circuler dans le rein un troisième fluide hyperoncotique comprenant de l'albumine à une concentration comprise entre 50 g/L et 120 g/L, des électrolytes et un inhibiteur de la coagulation à basse température comprise entre 5°C et 25°C tandis que la pression est augmentée de 20 mmHg à entre 70 mmHg et 90 mmHg;
dans une deuxième étape de restauration, faire circuler dans le rein un quatrième fluide hyperoncotique comprenant des globules rouges (RBC), de l'albumine à une concentration comprise entre 50 g/L et 120 g/L et des électrolytes et un inhibiteur de la coagulation à une température comprise entre 30°C et 37°C;
évaluer le rein selon des critères conventionnels.
